# FASCICULE DE BREVET EUROPEEN

(11) **EP 3 494 703 B1**
(45) Date de publication et mention de la délivrance du brevet: **13.04.2022**
(21) Numéro de dépôt: 17764869.8
(22) Date de dépôt: 28.07.2017
(51) Int. Cl.: H04N 21/2343, H04N 21/2347, H04N 21/4405, H04N 21/4728

(54) **PROCÉDÉ DE LECTURE ET DE GÉNÉRATION D'UN FLUX VIDÉO CONTENANT DES IMAGES COMPRESSÉES ET CHIFFRÉES**
VERFAHREN ZUM LESEN UND ZUR ERZEUGEN EINES VIDEOSTROMS MIT KOMPRIMIERTEN UND VERSCHLÜSSELTEN BILDERN
METHOD OF READING AND GENERATING A VIDEO STREAM CONTAINING COMPRESSED AND ENCRYPTED IMAGES

(30) Priorité: 05.08.2016 FR 1657613
(43) Date de publication de la demande: 12.06.2019
(73) Titulaire: Viaccess, 92057 Paris La Défense Cedex (FR)
(72) Inventeur: HAMON, Vincent, 35000 Rennes (FR)
(74) Mandataire: INNOV-GROUP
(86) Numéro de dépôt international: PCT/FR2017/052139
(87) Numéro de publication internationale: WO 2018/024972

(56) Documents cités:
- WO-A2-2008/134014
- JP-A- 2014 060 512
- US-A1- 2005 237 380
- US-A1- 2013 163 817
- US-A1- 2016 044 346
- OMAR A NIAMUT ET AL: "Towards a format-agnostic approach for production, delivery and rendering of immersive media", 20130228; 20130228 - 20130301, 28 février 2013 (2013-02-28), pages 249-260, XP058018780, DOI: 10.1145/2483977.2484007 ISBN: 978-1-4503-1894-5
- YEONGYUN KIM ET AL: "A selective video encryption for the region of interest in scalable video coding", TENCON 2007 - 2007 IEEE REGION 10 CONFERENCE, IEEE, PI, 1 octobre 2007 (2007-10-01), pages 1-4, XP031201236, DOI: 10.1109/TENCON.2007.4428979 ISBN: 978-1-4244-1271-6

## Description

L'invention concerne un procédé de lecture et un lecteur d'un flux vidéo contenant des images compressées et chiffrées. L'invention concerne également un procédé de génération ainsi qu'un générateur d'un flux vidéo contenant des images compressées et chiffrées. Enfin, l'invention concerne aussi un support d'enregistrement d'informations pour la mise en œuvre de ces procédés.

Par « compression », on désigne ici l'opération consistant à réduire le nombre de bits utilisés pour coder une même information. On désigne comme information compressée le résultat de cette opération. Par « décompression », on désigne l'opération inverse, qui permet d'obtenir, à partir de l'information compressée, l'information sous la forme qu'elle avait avant d'être compressée, et comme information décompressée son résultat.

Par « chiffrement », on désigne l'opération consistant à rendre inintelligible une information à l'aide d'une information secrète appelée « clef » de manière à ce que cette information puisse être de nouveau rendue intelligible seulement à l'aide de cette clef, ou d'une autre clef correspondant à cette clef. On désigne comme information chiffrée le résultat de cette opération. Par « déchiffrement », on désigne l'opération inverse, qui permet d'obtenir, à partir de l'information chiffrée, l'information sous la forme qu'elle avait avant d'être chiffrée, et comme information déchiffrée son résultat.

Des procédés de lecture, par un lecteur électronique, d'un flux vidéo contenant des images compressées et chiffrées sont connus. À cet effet, le lecteur électronique comporte :
- un module de déchiffrement qui déchiffre le flux vidéo pour obtenir un flux vidéo déchiffré,
- un codec (codeur - décodeur) qui décompresse le flux vidéo déchiffré pour obtenir un flux vidéo décompressé, et
- un composeur qui construit, à partir du flux vidéo décompressé, un flux vidéo en bande de base directement affichable par un écran associé à ce lecteur.

Après le module de déchiffrement ou après le Codec, le flux vidéo n'est pas chiffré. Il est donc vulnérable vis-à-vis d'une attaque consistant à distribuer illégalement ce flux vidéo déchiffré vers un lecteur d'un tiers qui n'a pas acquis légalement les droits nécessaires pour afficher ce flux vidéo. Pour rendre plus difficile ce type d'attaque, il a déjà été proposé différentes solutions comme les solutions connues sous les acronymes PMP (« Protected Media Path ») ou SVP (« Secure Video Path »). Toutefois, ces solutions ne sont pas complètement implémentées dans tous les terminaux susceptibles d'être amenés à lire et à déchiffrer de tels flux vidéo. Par exemple, certains téléphones intelligents, plus connus sous le nom de « smartphones », n'implémentent pas complètement cette solution de sorte qu'ils sont vulnérables.

L'invention vise donc à proposer un procédé de lecture d'un flux vidéo contenant des images compressées et chiffrées qui permette de dégrader la qualité du flux vidéo qui pourrait être distribué illégalement sans que cela nécessite la mise en œuvre d'une solution telle que la solution SVP ou PMP.

De l'état de la technique est également connu de :
- US2005237380A1,
- JP2014060512A,
- US2016/044346A1,
- WO2008/134014A2,
- US2013/163817A1,
- YEONGYUN KIM et Al : « A selective video encryption for the région of interest in scalable video coding », TENCON 2007, IEEE REGION 10 CONFERENCE, 1/10/2007, pages 1-4,
- OMAR A NIAMUT ET AL : "Toward a format-agnostic approach for production, delivery and rendering of immersive média", ISBN : 978-1-4503-1894-5, pages 249-260, 23/02/2013.

Elle a donc pour objet un procédé de lecture d'un flux vidéo contenant des images compressées et chiffrées conforme à la revendication 1.

Grâce au procédé de lecture revendiqué, le flux vidéo déchiffré par le lecteur du terminal contient une version haute qualité du flux vidéo uniquement dans des portions d'images situées à proximité d'un point d'intérêt. À l'inverse, pour les portions de l'image éloignées de ce point d'intérêt, les informations permettant de construire la version haute qualité ne sont pas déchiffrées. Ainsi, ces informations ne peuvent pas être déduites du flux vidéo déchiffré. Dès lors, même si ce flux vidéo déchiffré est illégalement distribué vers d'autres lecteurs, les utilisateurs de ces autres lecteurs ne peuvent pas bénéficier d'un flux vidéo entièrement en haute qualité. Au mieux, ils peuvent bénéficier d'un flux vidéo partiellement en haute qualité.

De plus, les utilisateurs de ces autres lecteurs ne peuvent pas choisir les portions de l'image pour lesquelles une version haute qualité est affichée même s'ils modifient les coordonnées du point d'intérêt acquis par leur propre lecteur.

Ainsi, bien que des solutions de protection, telle que la solution SVP ou PMP, ne soient pas mises en œuvre, le flux vidéo déchiffré, et éventuellement distribué illégalement, a une qualité dégradée qui ne permet pas d'afficher une version entièrement en haute qualité de chaque image de ce flux vidéo.

Le fait que la version dégradée soit fonction du contenu que la version haute qualité, par exemple car sa résolution spatiale, colorimétrique ou temporelle est inférieure, permet de rendre la mise en œuvre du procédé encore plus imperceptible pour l'utilisateur. De plus, ceci est obtenu sans avoir à déchiffrer la variante haute qualité qui code la version haute qualité.

Enfin, dans le procédé revendiqué chaque flux vidéo déchiffré est généré à partir du même flux vidéo chiffré reçu et cela même si les coordonnées acquises du point d'intérêt ne sont pas les mêmes d'un terminal à un autre. Cela facilite grandement la génération et la diffusion de ce flux vidéo vers de nombreux terminaux.

Les modes de réalisation de ce procédé de lecture peuvent comporter une ou plusieurs des caractéristiques des revendications dépendantes.

Les différents modes de réalisation du procédé de lecture peuvent présenter un ou plusieurs des avantages suivants :
- Le fait que les coordonnées du point d'intérêt soient établies à partir d'un déplacement de l'utilisateur permet à cet utilisateur de commander lui-même simplement les portions d'images qu'il souhaite visualiser en haute qualité. À l'inverse, les autres utilisateurs qui utiliseraient illégalement le même flux vidéo déchiffré ne peuvent pas bénéficier de cette fonctionnalité. Ainsi, ces autres utilisateurs ne profitent pas d'un confort de visualisation équivalent à celui de l'utilisateur qui acquière légalement ce flux vidéo. Cela limite donc l'intérêt et les possibilités de distribuer un tel flux vidéo déchiffré vers d'autres utilisateurs.
- Lorsque le point d'intérêt correspond au point vers lequel l'utilisateur dirige son regard, les carreaux non sélectionnés correspondent aux portions de l'image que l'utilisateur ne regarde pas. Cela rend l'affichage d'une version dégradée de l'image à l'intérieur de ces carreaux non sélectionnés difficilement perceptibles par l'utilisateur. Ainsi, le confort de visualisation de l'utilisateur est peu perturbé par la mise en œuvre de ce procédé.
- Le fait que l'image affichée pour les yeux droit et gauche de l'utilisateur soit uniquement composée à partir des versions haute qualité du flux vidéo rend la mise en œuvre du procédé revendiqué totalement imperceptible par l'utilisateur.
- Le fait que les images du flux vidéo s'étendent au-delà de l'angle de vision d'un être humain permet de rendre la mise en œuvre du procédé de lecture imperceptible ou peu perceptible par l'utilisateur.

L'invention a également pour objet un procédé de génération d'un flux vidéo contenant des images compressées et chiffrées.

L'invention a également pour objet un support d'enregistrement d'informations comportant des instructions pour mettre en œuvre l'un quelconque des procédés revendiqués, lorsque ces instructions sont exécutées par un microprocesseur électronique.

L'invention a également pour objet un lecteur électronique d'un flux vidéo contenant des images compressées et chiffrées.

Enfin l'invention a également pour objet un générateur d'un flux vidéo contenant des images compressées et chiffrées.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système de génération et de lecture d'un flux vidéo compressé et chiffré ;
- la figure 2 est une illustration schématique et partielle de la structure du flux vidéo compressé et chiffré ;
- la figure 3 est une illustration schématique d'une image du flux vidéo ;
- la figure 4 est une illustration schématique de l'architecture d'un lecteur du flux vidéo de la figure 2 ;
- la figure 5 est un organigramme d'un procédé de génération du flux vidéo de la figure 2 ; et
- la figure 6 est un organigramme d'un procédé de lecture du flux vidéo de la figure 2.

Dans ces figures, les mêmes références sont utilisées pour désigner les mêmes éléments. Dans la suite de cette description, les caractéristiques et fonctions bien connues de l'homme du métier ne sont pas décrites en détail.

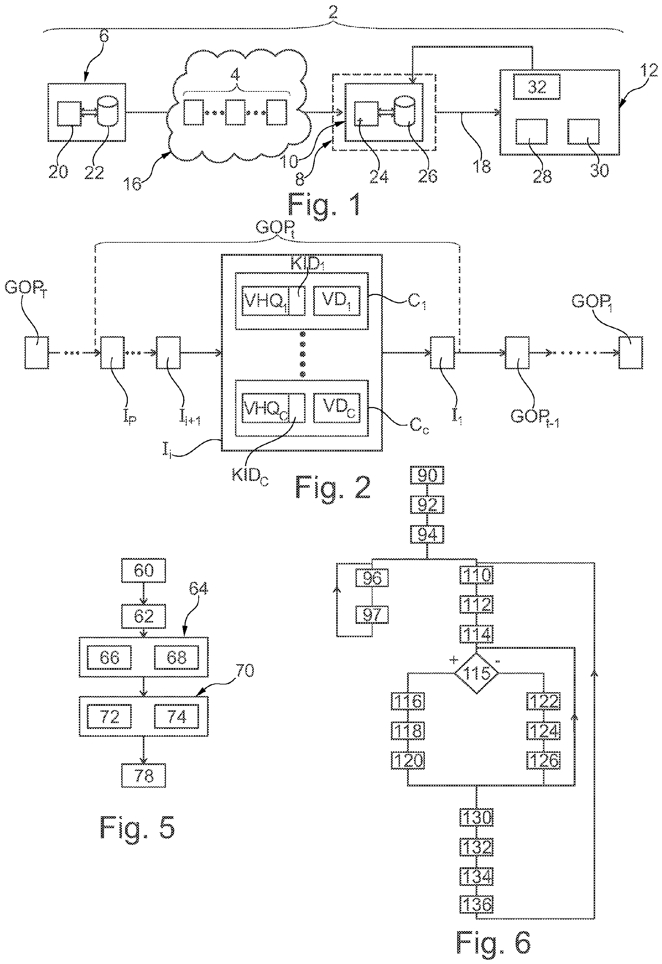

La figure 1 représente un système 2 de génération et de lecture d'un flux vidéo 4 compressé et chiffré par carreaux (« tile » en anglais). Le système 2 comporte :
- un générateur 6 du flux vidéo 4,
- un terminal 8 équipé d'un lecteur 10 du flux vidéo 4, et
- un dispositif 12 d'affichage du flux vidéo 4 lu par le lecteur 10.

Le flux vidéo 4 code une succession temporelle et ordonnée d'images destinées à s'afficher les unes après les autres sur un écran à une fréquence donnée appelée ici «fréquence de rafraîchissement ». Dans ce mode de réalisation, le flux vidéo 4 est une vidéo immersive. Ainsi, typiquement, le flux vidéo 4 est destiné à être affiché par un dispositif d'affichage de réalité virtuelle.

Le flux vidéo 4 est donc une vidéo dans laquelle chaque image contient simultanément des vues de ce qui entoure la caméra dans plusieurs directions différentes. Par exemple, chaque image contient des vues prises dans toutes les directions contenues à l'intérieur d'un cône de vision dont le sommet est confondu avec l'objectif de la caméra. Généralement, l'angle α au sommet de ce cône de vision est supérieur à l'angle de vision d'un être humain qui serait situé au même emplacement que la caméra. À cause de cela, chaque image du flux vidéo comporte plus de vues que ce qui peut être perçu, en une seule fois, par un être humain immobile et situé à l'emplacement de la caméra. Typiquement, l'angle α est donc strictement supérieur à 70° ou 80° et, généralement, supérieur à 100° ou 180° ou 260°. Dans le cas où le cône de vision n'a pas une base circulaire, c'est-à-dire qu'il ne s'agit pas d'un cône de révolution, l'angle α est défini comme étant égal à l'angle au sommet du plus petit cône de révolution qui contient entièrement ce cône de vision. Par plus petit cône de révolution, on désigne le cône de révolution qui a le plus petit angle au sommet.

Lorsque l'angle α est égal à 180°, l'image est souvent appelé « image hémisphérique ». L'angle α peut aussi être égal à 360°. Dans ce cas, chaque image contient les vues prises dans toutes les directions de l'espace. On parle alors souvent d'images 360° ou d'images omnidirectionnelles.

La caméra utilisée pour filmer et enregistrer une vidéo immersive comporte par exemple plusieurs objectifs simultanément pointés dans des directions différentes et/ou des objectifs à très grands angles d'ouverture, c'est-à-dire des objectifs dont l'angle d'ouverture est supérieur à 100° ou 160° ou 180°.

Le générateur 6 est raccordé au terminal 8, par exemple, par l'intermédiaire d'un réseau 16 de transmission d'informations tel que le réseau Internet. Le générateur 6 peut être une tête de réseau de diffusion ou un serveur de vidéos.

Le générateur 6 comporte un microprocesseur électronique 20 programmable raccordé à une mémoire 22. Le microprocesseur 20 est capable d'exécuter les instructions enregistrées dans la mémoire 22. Ici, la mémoire 22 comporte les instructions nécessaires pour mettre en œuvre le procédé de la figure 5.

Le terminal 8 commande le dispositif 12 pour afficher le flux vidéo qu'il lit. Dans ce mode de réalisation, le dispositif 12 est considéré comme étant un élément extérieur au terminal 8.

Le lecteur 10 déchiffre et décompresse le flux vidéo 4 pour obtenir un flux vidéo 18 en bande de base.

Typiquement, un flux vidéo en bande de base est principalement constitué par des blocs de bits successifs qui codent chacun la couleur d'un pixel respectif. C'est la position du bloc de bits à l'intérieur du flux vidéo 18 qui code la position du pixel correspondant. Par exemple, le flux vidéo 18 est conforme au format HDMI (« High Définition Multimedia Interface ») ou similaire. Si nécessaire, le flux vidéo 18 peut être chiffré conformément au standard HDCP (« High-Bandwidth Digital Content Protection »). La liaison entre le lecteur 10 et le dispositif 12 est une liaison courte distance, c'est-à-dire une distance généralement inférieure à 30 m ou 20 m ou 10 m. Par la suite, le flux vidéo 18 est dit en clair car il n'a plus besoin d'être déchiffré par le lecteur 10 pour pouvoir être affiché, de façon intelligible, par le dispositif 12.

Le lecteur 10 comporte un microprocesseur électronique 24 programmable raccordé à une mémoire 26. Le microprocesseur 24 est capable d'exécuter les instructions enregistrées dans la mémoire 26. Ici, la mémoire 26 comporte les instructions nécessaires pour la mise en œuvre du procédé de la figure 6.

Le dispositif 12 est ici un casque HDM (« Head Mounted Display ») ou tout autre casque de réalité virtuelle permettant d'obtenir une vision stéréoscopique. À cet effet, le dispositif 12 comporte notamment deux écrans 28 et 30 placés, respectivement, en face des yeux droit et gauche de l'utilisateur. Le dispositif 12 comporte aussi un ensemble 32 de capteurs capables de mesurer une ou plusieurs grandeurs physiques représentatives de la direction dans laquelle le regard de l'utilisateur pointe. Par exemple, l'ensemble 32 comporte des capteurs qui mesurent le déplacement de la tête de l'utilisateur et/ou des pupilles de l'utilisateur. L'ensemble 32 est raccordé au lecteur 10.

Par la suite, le mode de réalisation du système 2 est décrit dans le cas particulier où :
- le flux vidéo 4 est codé conformément à la norme H.265, également connue sous le terme de HEVC (« High Efficiency Video Coding »),
- la couche de transport est conforme à la norme ISOBMFF (« ISO Base Media File Format »), et
- le chiffrement/déchiffrement du flux vidéo est conforme à la norme CENC (« Common Encryption Scheme »).

Pour plus d'informations sur la norme H.265, le lecteur peut se référer aux documents ISO/CEI 23008-2 et UIT-H.265 publiés en avril 2015 ou leurs versions ultérieures. Pour plus d'informations sur la norme ISOBMFF, le lecteur peut se référer au document ISO/CEI 14496-12 publié en décembre 2015. Pour plus d'informations sur la norme CENC, le lecteur peut se référer au document ISO/CEI 23001-7 seconde édition ou leurs versions ultérieures.

Ces normes étant connues de l'homme du métier, les principes de fonctionnement et les différentes possibilités d'implémentation qu'offrent ces normes ne sont pas décrites ici en détail. Seule la façon particulière d'utiliser et d'implémenter ces normes pour générer et lire le flux vidéo 4 est décrite ici. La terminologie utilisée dans cette description est la même que celle définie dans ces normes.

La figure 2 représente une illustration schématique de l'organisation du flux vidéo 4 compressé et chiffré par carreaux.

Le flux vidéo 4 est constitué d'une succession temporelle de groupes de bits codant chacun un plus petit groupe d'images fermé. Un groupe d'images fermé est connu sous le terme anglais de « closed group of pictures ». Un groupe d'images est dit fermé lorsqu'il est un groupe d'images qui peut être décompressé indépendamment des autres groupes d'images. Un groupe d'images fermé est dit plus petit groupe d'images fermé, lorsqu'il ne contient pas d'autre groupe d'images fermé. Par la suite, sauf indication contraire, chaque plus petit groupe d'images fermé du flux vidéo 4 est simplement appelé « groupe d'images ».

Typiquement, ces groupes d'images sont placés dans le flux vidéo 4 dans l'ordre dans lequel ces groupes d'images doivent s'afficher sur les écrans 28 et 30 lorsqu'ils sont lus par le lecteur 10.

Sur la figure 2, seul le premier groupe d'images GOP₁, le dernier groupe d'images GOPT et un groupe intermédiaire d'images GOPₜ ont été représentés. Le nombre T de groupes d'images peut être grand et dépend de la durée de la vidéo. Par exemple, le nombre T peut être supérieur à 1000, 10000 ou 100000.

Sur la figure 2 et les suivantes, les pointillés indiquent qu'une partie de l'illustration a été omise pour la simplifier.

Les groupes d'images ont des structures similaires ou identiques et seule la structure du groupe d'images GOPₜ est décrite et représentée plus en détail.

Le groupe GOPₜ comporte P images I₁ à I_{P}. Le nombre P est généralement petit, c'est-à-dire inférieur à quinze ou dix. Il peut aussi être égal à un.

La norme ISOBMFF prévoit la possibilité de découper un « sample » en plusieurs plages de bits d'informations appelés « variant bit range group » et d'associer chacune de ces plages à une ou plusieurs variantes appelées « variant bit range ». Dans le mode de réalisation décrit ici, une image Iᵢ correspond à ce qui est appelé « sample » dans la norme ISOBMFF. De plus, la possibilité offerte par cette norme est exploitée pour diviser chaque image I₁ à I_{P} en un nombre N_{c} de plages de bits et pour associer chacune de ces plages à deux variantes appelées, respectivement, « variante haute qualité » et « variante dégradée ». Cette organisation des bits codant chaque image est la même pour chaque image. Ainsi, elle est décrite plus en détail uniquement pour l'image Iᵢ.

Pour chaque image Iᵢ, un pavage de sa surface totale avec N_{c} carreaux contigus C₁ à C_{c} a été préalablement défini avant la compression et le chiffrement du flux vidéo 4. Le nombre N_{c} est supérieur ou égal à deux ou trois et, de préférence, supérieur ou égal à quatre ou huit ou seize. Généralement, le nombre N_{c} est inférieur ou égal à 2⁸ ou 2¹⁰. Le nombre N_{c} est choisi de façon à ce que la portion de l'image Iᵢ située à l'intérieur d'un carreau Cⱼ contienne au moins 1000 pixels ou 10000 pixels de l'image. Ici, le nombre N_{c} est choisi égal à seize.

Dans ce mode de réalisation, chaque carreau Cⱼ est un rectangle ou un carré. De plus, tous les carreaux Cⱼ ont les mêmes dimensions. Dès lors, ces carreaux C₁ à C_{c} se distinguent les uns des autres uniquement par leurs coordonnées dans le plan de l'image Iᵢ.

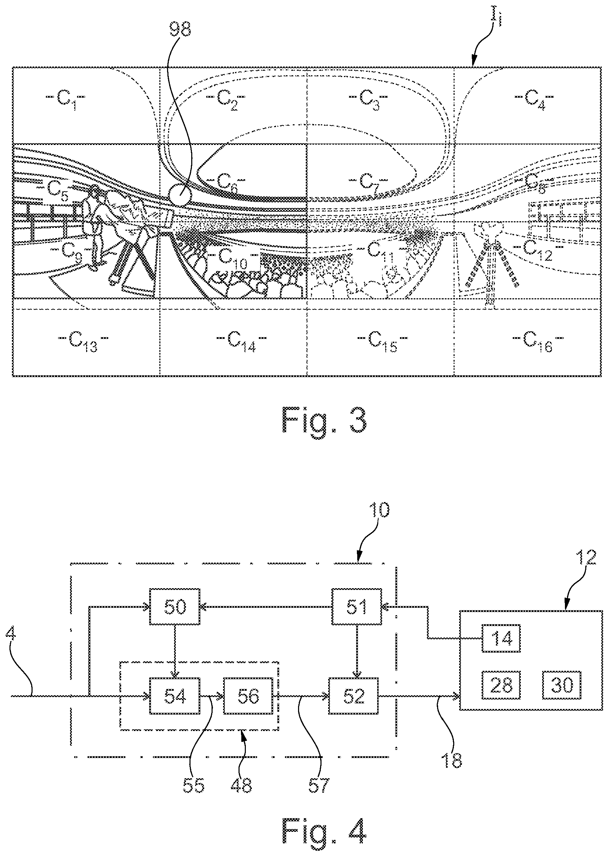

La figure 3 représente les seize carreaux C₁ à C₁₆ de l'image Iᵢ.

Lors de la génération du flux vidéo 4, à chaque carreau Cⱼ de l'image Iᵢ sont associées deux variantes VHQⱼ et VDⱼ. Les variantes associées au carreau Cⱼ sont des plages de bits du flux vidéo 4 qui codent chacune une version respective pour le contenu de l'image Iᵢ situé à l'intérieur du carreau Cⱼ. Plus précisément, les variantes VHQⱼ et VDⱼ codent, respectivement, des versions dites « haute qualité » et « dégradée » du contenu de l'image Iᵢ situé à l'intérieur de ce carreau Cⱼ. La version dégradée présente à l'utilisateur, lorsqu'elle est affichée sur l'écran 28 ou 30, moins d'informations que la version haute qualité de la même portion de l'image Iᵢ, lorsque c'est cette dernière qui est affichée. À cet effet, par exemple, la résolution spatiale de la version haute qualité est plus élevée que celle de la version dégradée. Par « résolution spatiale de l'image», on désigne le nombre de pixels par unité de surface de l'image. Ici, la variante VHQⱼ code le même contenu que la variante VDⱼ mais avec une résolution spatiale plus élevée. Par exemple, sa résolution spatiale est deux ou quatre ou seize fois plus élevée. De préférence, la résolution spatiale de la variante VHQⱼ est supérieure ou égale à la résolution spatiale des écrans 28 et 30. La résolution spatiale d'un écran est le nombre maximal de pixels par unité de surface que cet écran est capable d'afficher. À l'inverse, la résolution spatiale de la variante VDⱼ est strictement inférieure à la résolution spatiale des écrans 28 et 30. Ainsi, lorsque la variante VDⱼ est utilisée pour construire la portion de l'image Iᵢ située à l'intérieur du carreau Cⱼ, les couleurs de certains pixels doivent être déduites par interpolation à partir des couleurs des pixels voisins, ce qui dégrade la qualité de l'image affichée à l'intérieur du carreau Cⱼ.

Par exemple, la version haute qualité est une version haute définition de l'image, tandis que la version dégradée est une version basse définition de cette même image.

Dans le flux vidéo 4, chaque variante VHQⱼ du groupe d'images GOPₜ est compressée sans tenir compte des variantes VHQ_{k≠j} associées à d'autres carreaux C_{k≠j} dont les coordonnées sont différentes. De plus, dans ce mode de réalisation, la variante VHQⱼ est compressée sans tenir compte des variantes dégradées et, notamment, sans tenir compte des variantes VD₁ à VDc. Enfin, chaque variante VHQⱼ du groupe d'images GOPₜ est compressée sans tenir compte des variantes VHQⱼ des images d'un autre groupe d'image. Par la suite, la variante VHQⱼ obtenue après cette opération de compression est appelée « variante VHQⱼ compressée ».

Grâce à cela, il est possible de décompresser la variante VHQⱼ sans qu'il soit nécessaire de décompresser aussi les variantes VHQ_{k≠j} associées à des carreaux différents du carreau Cⱼ et sans qu'il soit nécessaire de décompresser les variantes dégradées.

Éventuellement, la variante VHQⱼ est compressée en prenant en compte les autres variantes VHQⱼ des images I₁ à I_{P} associées au même carreau Cⱼ. Ceci permet d'accroître le taux de compression car les informations redondantes entre les différentes variantes VHQⱼ des différentes images I₁ à I_{P} peuvent alors être éliminées. Par contre, il peut alors être nécessaire de décompresser toutes les variantes VHQⱼ des images I₁ à I_{P} avant de pouvoir accéder au contenu de la variante VHQⱼ de l'image Iᵢ. Cela peut donc retarder la décompression d'une variante VHQⱼ lors de la lecture. Toutefois, tant que ce retard reste faible, c'est-à-dire typiquement inférieur à 100 ms ou 20 ms, celui-ci reste difficilement perceptible par l'utilisateur.

Chaque variante dégradée VDⱼ du groupe d'images GOPₜ est compressée de façon similaire à ce qui vient d'être décrit pour les variantes VHQⱼ. Ainsi, comme les variantes VHQⱼ, la variante dégradée VDⱼ peut être décompressée indépendamment des variantes dégradées VD_{k≠j} associées aux carreaux C_{k≠j} différent du carreau Cⱼ et indépendamment des variantes hautes qualités. Par la suite, la variante VDⱼ obtenue après cette opération de compression est appelée « variante VDⱼ compressée ».

La possibilité de compresser et décompresser par morceau un flux vidéo est prévue dans la norme H.265. Ici, cette possibilité est exploitée pour générer le flux vidéo 4.

Dans le flux vidéo 4, le bloc de bits contenant les variantes VHQⱼ compressées pour les images I₁ à I_{P} est également chiffré à l'aide d'une clé secrète KHQⱼ pour obtenir des variantes VHQⱼ compressées et chiffrées. Typiquement, la clé KHQⱼ est différente pour chaque carreau Cⱼ. Ce bloc de bits est chiffré indépendamment, c'est-à-dire sans prendre en compte, les blocs de bits contenant d'autres variantes haute qualité VHQ_{k≠j} compressées associées à des carreaux C_{k≠j} différents du carreau Cⱼ. De plus, ici, ce bloc de bits est aussi chiffré indépendamment des blocs de bits qui contiennent les variantes VHQⱼ compressées d'autres groupes d'images. Grâce à cela, les variantes VHQⱼ compressées et chiffrées des images I₁ à I_{P} peuvent être déchiffrées indépendamment des variantes haute qualité compressées et chiffrées associées aux carreaux C_{k≠j} différents du carreau Cⱼ. Cette possibilité de chiffrer par morceau un flux vidéo est prévue dans la norme CENC. Par contre cette norme n'indique pas et ne suggère pas que cette possibilité peut être mise en œuvre pour chiffrer indépendamment les unes des autres des variantes différentes d'un flux vidéo.

De façon similaire, le bloc de bits contenant les variantes VDⱼ compressées des images I₁ à I_{P} est chiffré indépendamment des blocs de bits contenant les variantes dégradées VD_{k≠j} associées à des carreaux C_{k≠j} différents du carreau Cⱼ. Les variantes VDⱼ compressées sont également chiffrées indépendamment des variantes haute qualité compressée. Ainsi, les variantes VDⱼ compressées et chiffrées peuvent être déchiffrées indépendamment des variantes dégradées VD_{k≠j} et des variantes haute qualité du flux vidéo 4.

Le bloc de bits contenant les variantes VDⱼ compressées des images I₁ à I_{P} est chiffré à l'aide d'une clé secrète K_{D}. Ce bloc de bits chiffré est appelé par la suite « variantes VDⱼ compressées et chiffrées ». La clé K_{D} est différente de toutes les clés KHQⱼ. Par exemple, la clé K_{D} est la même pour tous les carreaux Cⱼ de l'image.

Pour chaque image et chaque carreau Cⱼ, le flux vidéo 4 contient uniquement les variantes VHQⱼ et VDⱼ compressées et chiffrées. Ainsi, les variantes VHQⱼ ne peuvent être déchiffrées que par un lecteur 10 ayant acquis au préalable la clé KHQⱼ et la variante VDⱼ ne peut être déchiffrée que par un lecteur 10 ayant acquis au préalable la clé K_{D}.

Enfin, chaque variante VHQⱼ est associée dans le flux vidéo 4 à un identifiant KIDⱼ qui permet à un agent DRM du lecteur 10 d'identifier ou de construire la clé KHQⱼ à utiliser pour déchiffrer cette variante VHQⱼ compressée et chiffrée.

Dans ce mode de réalisation, étant donné que la clé K_{D} est la même pour tous les carreaux Cⱼ, il n'est pas nécessaire d'associer à chaque variante VDⱼ compressée et chiffrée un identifiant de la clé K_{D}.

La figure 4 représente plus en détail l'architecture du lecteur 10. Les différents composants du lecteur 10 représenté sur cette figure peuvent chacun être implémentés soit sous forme logicielle soit sous forme matérielle. Le lecteur 10 comporte :
- un module 48 de déchiffrement et de décompression du flux vidéo 4,
- un agent DRM 50 apte à acquérir, vérifier, gérer et stocker des informations secrètes comme les clés KHQⱼ et K_{D},
- un positionneur 51 qui établit les coordonnées d'un point d'intérêt en fonction des mesures des capteurs de l'ensemble 32, et
- un composeur 52 chargé de construire le flux vidéo 18 en fonction des coordonnées établies par le positionneur 51.

Le module 48 comporte :
- un sous-module 54 de déchiffrement qui déchiffre le flux vidéo 4 pour obtenir un flux vidéo 55 déchiffré, et
- un codec 56 (codeur - décodeur) qui décode le flux vidéo 55 pour obtenir un flux vidéo 57 en clair, c'est-à-dire un flux vidéo dans lequel les images sont à la fois déchiffrées et décompressées.

Le fonctionnement habituel des différents composants du lecteur 10 est connu et décrit dans les normes citées ci-dessus. Ainsi, par la suite, seul le fonctionnement de ces composants spécifiques à la lecture du flux vidéo 4 est décrit en détail. Ici, ce fonctionnement est décrit en référence à la figure 6.

Le fonctionnement du générateur 6 est maintenant décrit en référence au procédé de la figure 5.

Lors d'une étape 60, le générateur 6 acquiert les coordonnées des carreaux Cⱼ qui, lorsqu'ils sont réunis, forment un pavage de la totalité de la surface des images à compresser et à chiffrer. Typiquement, les coordonnées de ces carreaux sont définies par rapport à un repère fixe du plan de l'image. Par exemple, les coordonnées des carreaux Cⱼ sont acquises à partir d'une table préenregistrée qui contient pour chaque format d'image, les coordonnées des carreaux à utiliser.

Lors d'une étape 62, le générateur 6 reçoit le flux vidéo à compresser et à chiffrer. Par exemple, pour cela, le générateur 6 est raccordé à une caméra ou à un support d'enregistrement d'informations sur lequel le flux vidéo est enregistré. A cet instant, le flux vidéo reçu contient à lui seul toutes les informations nécessaires pour être affiché sur un écran de façon intelligible par un être humain. En particulier, pour obtenir cet affichage, il n'est pas nécessaire de combiner les images en clair avec une information secrète comme une clef de déchiffrement. Ce flux vidéo reçu comporte à la fois les versions haute qualité et dégradée de chaque portion de chaque image.

Lors de cette étape, pour chaque carreau Cⱼ dont les coordonnées ont été acquises lors de l'étape 60 et pour chaque image du flux vidéo reçu, le générateur 6 acquiert les variantes VHQⱼ et VDⱼ en clair.

Lors d'une étape 64, le générateur 6 découpe le flux vidéo en groupes d'images.

Ensuite, pour chaque groupe d'images et chaque carreau Cⱼ, il exécute les opérations suivantes :
- une opération 66 de compression des variantes VHQⱼ des images I₁ à I_{P} pour obtenir les variantes VHQⱼ compressées décrites en référence à la figure 2, et
- une opération 68 de compression des variantes VDⱼ des images I₁ à I_{P} pour obtenir les variantes VDⱼ compressées décrites en référence à la figure 2.

Ensuite, lors d'une étape 70, pour chaque carreau Cⱼ, le générateur 6 exécute les opérations suivantes :
- une opération 72 de chiffrement avec la clé KHQⱼ des variantes VHQⱼ compressées pour obtenir les variantes VHQⱼ compressées et chiffrées décrites en référence à la figure 2, et
- une opération 74 de chiffrement avec la clé K_{D} des variantes VDⱼ compressées pour obtenir les variantes VDⱼ compressées et chiffrées décrites en référence à la figure 2.

Enfin, lors d'une étape 78, les variantes VHQⱼ, compressées et chiffrées, et les variantes VDⱼ, compressées et chiffrées, sont assemblées les unes avec les autres pour former le flux vidéo 4. Lors de cette étape, le générateur associe, dans le flux vidéo généré, chacune des variantes VHQⱼ, compressées et chiffrées, et chacune des variantes VDⱼ, compressées et chiffrées, au « variant bit range group » correspondant, c'est-à-dire au carreau Cⱼ correspondant.

À l'issue de cette étape 78, le flux vidéo 4 est soit transmis au fur et à mesure de sa génération au terminal 8 à travers le réseau 16, soit enregistré dans un fichier dans la mémoire 22. Le premier mode de transmission correspond à une transmission connue sous le terme anglais de « streaming _{»}, c'est-à-dire que la transmission du flux vidéo 4 débute avant que toutes les variantes de ce flux vidéo aient été compressées et chiffrées. À l'inverse, le second mode de transmission correspond à une transmission connue sous le terme de « téléchargement » (« downloading » en anglais) dans lequel la transmission du fichier vers le terminal 8 ne peut commencer qu'après que toutes les images du flux vidéo aient été acquises, compressées et chiffrées.

Le fonctionnement du lecteur 10 va maintenant être décrit en référence au procédé de la figure 6.

Initialement, lors d'une étape 90, l'agent DRM 50 acquiert les différentes clés KHQⱼ et la clé K_{D} nécessaires pour déchiffrer à la fois les variantes VHQⱼ compressées et chiffrées et les variantes VDⱼ compressées et chiffrées.

Lors d'une étape 92, le lecteur 10 reçoit le flux vidéo 4 transmis en « streaming » ou téléchargé à travers le réseau 16.

Lors d'une opération 94, avant le début de la lecture du flux vidéo 4, le lecteur acquiert les coordonnées de tous les carreaux Cⱼ utilisés lors de la génération du flux vidéo 4. Par exemple, cette information lui est communiquée par le générateur 6 à travers le réseau 16. Par la suite, on suppose que la division de chaque image en carreaux est la même depuis le début jusqu'à la fin de la vidéo.

Lors d'une étape 96, pendant toute la durée de la lecture du flux vidéo 4, les capteurs de l'ensemble 32 mesurent une ou plusieurs grandeurs physiques représentatives de la direction dans laquelle l'utilisateur regarde et transmet ces mesures au lecteur 10, et plus précisément au positionneur 51.

En réponse, lors d'une étape 97, le positionneur 51 acquiert ces mesures et établit les coordonnées, dans le plan des images, d'un point vers lequel l'utilisateur pointe son regard. Ce point est appelé « point d'intérêt » et porte la référence 98 sur la figure 3. Pour cela, ses coordonnées sont établies à partir des mesures acquises et, par exemple, de la position connue des yeux de l'utilisateur par rapport aux écrans 28 et 30.

Pendant toute la durée de la lecture du flux vidéo 4, les étapes 96 et 97 sont réitérées en boucle. Par exemple, ces étapes sont réitérées avec une fréquence supérieure à la fréquence d'affichage sur les écrans 28 et 30 des images ou des groupes d'images du flux vidéo 4. Ainsi, le positionneur 51 fournit en permanence des coordonnées à jour du point 98.

En parallèle, lors d'une étape 110, avant la lecture de chaque groupe d'images, l'agent DRM 50 acquiert les coordonnées du point d'intérêt établi par le positionneur 51.

Ensuite, lors d'une étape 112, l'agent DRM 50 sélectionne le ou les carreaux les plus proches des coordonnées du point 98. Par exemple, l'agent DRM 50 calcule la distance entre le point 98 et le centre de chacun des carreaux Cⱼ et sélectionne uniquement les quatre carreaux correspondant, respectivement, aux quatre distances calculées les plus petites.

Dans le cas de la figure 3, cela conduit à sélectionner les quatre carreaux C₅, C₆, C₉ et C₁₀. Les autres carreaux qui ne sont pas sélectionnés lors de cette étape 112 sont appelés « carreaux non sélectionnés ». Dans le cas de la figure 3, les carreaux non sélectionnés sont les carreaux C₁ à C₄, C₇ à C₈, et C₁₁ C₁₆.

Lors d'une étape 114, pour chaque carreau Cⱼ, l'agent DRM 50 lit l'identifiant KIDⱼ associé à la variante VHQⱼ compressée et chiffrée dans le flux vidéo 4.

Puis, lors d'une étape 115, pour chaque carreau Cⱼ, l'agent DRM 50 vérifie si les deux conditions suivantes sont simultanément remplies :
- le carreau Cⱼ est un carreau qui a été sélectionné lors de l'étape 112, et
- la clé KHQⱼ correspondant à l'identifiant KIDⱼ est l'une des clés acquises lors de l'étape 90.

Dans l'affirmative, lors d'une étape 116, l'agent DRM 50 fournit la clé KHQⱼ au sous-module 54 de déchiffrement.

En réponse, lors d'une étape 118, le sous-module 54 déchiffre, à l'aide de la clé KHQⱼ fournie, les variantes VHQⱼ compressées et chiffrées associées au carreau Cⱼ dans les images I₁ à I_{P} pour obtenir les variantes VHQⱼ compressées et déchiffrées pour chacune de ces images I₁ à I_{P}.

Ensuite, lors d'une étape 120, le codec 56 décompresse les variantes VHQⱼ compressées obtenues à l'issue de l'étape 118. Le codec 56 obtient alors les variantes VHQⱼ décompressées et déchiffrées pour les images I₁ à I_{P}.

Si lors de l'étape 115, le carreau Cⱼ n'est pas un carreau sélectionné lors de l'étape 112 ou si l'agent DRM 50 ne peut pas obtenir la clé KHQⱼ correspondant à l'identifiant KIDⱼ, alors le procédé se poursuit par une étape 122.

Lors de l'étape 122, l'agent DRM 50 fournit seulement la clé K_{D} au sous-module 54 de déchiffrement et non pas la clé KHQⱼ. À cause de cela, les variantes VHQⱼ compressées et chiffrées des images I₁ à I_{P} ne peuvent pas être déchiffrées.

En réponse, lors d'une étape 124, le sous-module 54 déchiffre les variantes VDⱼ compressées et chiffrées associées au carreau Cⱼ pour les images I₁ à I_{P} de manière à obtenir les variantes VDⱼ compressées et déchiffrées pour chacune de ces images I₁ à I_{P}.

Ensuite, lors d'une étape 126, le codec 56 décompresse les variantes VDⱼ compressées obtenues à l'issue de l'étape 124. Le codec 56 obtient ainsi les variantes VDⱼ décompressées et déchiffrées pour les images I₁ à I_{P}.

Les étapes 114 à 126 sont réitérées pour chaque carreau Cⱼ des images du groupe d'images.

Ensuite, lors d'une étape 130, le lecteur 10 construit la portion d'image contenue à l'intérieur de chaque carreau Cⱼ à partir de la variante décompressée et déchiffrée pour ce carreau Cⱼ lors de l'exécution des étapes 114 à 126. Ainsi, lors de cette étape, si la variante VHQⱼ associée à ce carreau Cⱼ a été décompressée et déchiffrée, le lecteur 10 construit la version haute qualité de la portion de l'image située à l'intérieur de ce carreau Cⱼ. Dans le cas inverse, c'est-à-dire si seule la variante VDⱼ associée à ce carreau Cⱼ a été décompressée et déchiffrée lors des étapes 114 à 126, alors le lecteur 10 construit seulement la version dégradée de la portion d'image située à l'intérieur de ce carreau Cⱼ.

Ensuite, lors d'une étape 132, le lecteur 10 assemble les versions haute qualité et basse qualité pour former les images décompressées et déchiffrées qui forment le flux vidéo 57 transmis au composeur 52.

Lors d'une étape 134, le composeur 52 compose le flux vidéo 18 à partir du flux vidéo 57. Plus précisément, dans ce mode de réalisation, pour chaque image du flux vidéo 57, il compose deux fractions d'image, à partir de chaque image du flux vidéo 57, respectivement pour les yeux droit et gauche de l'utilisateur. À cet effet, il utilise les coordonnées du point 98 qui lui sont transmises par le positionneur 51 et la position connue ainsi que les dimensions connues des écrans 28 et 30. Typiquement, ces deux fractions d'image sont chacune quatre ou dix fois plus petites que l'image complète Iᵢ contenue dans le flux vidéo 57. De plus, ces fractions d'image sont centrées sur le point 98. Dans ces conditions, le composeur 52 utilise uniquement les versions haute qualité de l'image décompressée et déchiffrée pour construire les deux fractions d'image. Ainsi, dans ce mode de réalisation, les versions dégradées des portions de l'image ne sont pas contenues dans le flux vidéo 18.

Enfin, lors d'une étape 136, le composeur 52 transmet, par l'intermédiaire du flux vidéo 18, les fractions d'image composées et le dispositif 12 les affiche sur les écrans 28 et 30.

On notera que dans le procédé décrit, les variantes VHQⱼ qui permettent de construire les versions haute qualité des portions de l'image qui sont situées à l'intérieur des carreaux non sélectionnés ne sont jamais déchiffrées. Ainsi, le flux vidéo 55 ou 57 ou 18 ne permet pas de construire une version haute qualité pour toutes les portions de l'image.

De plus, le flux vidéo 55 ou le flux vidéo 57 est difficilement utilisable par un autre utilisateur que l'utilisateur du terminal 8. En effet, la direction dans laquelle regarde cet autre utilisateur sera différente, au moins par moments, de la direction dans laquelle regarde l'utilisateur du dispositif 12. Dès lors, les images affichées par le dispositif d'affichage de cet autre utilisateur pour la direction dans laquelle il regarde ne sont pas toujours en haute qualité. Cela diminue le confort de visualisation de cet autre utilisateur et rend la distribution illicite du flux vidéo 55 ou 57 vers d'autres utilisateurs peu intéressante. Enfin, ce résultat est obtenu sans que cela ne dégrade de façon perceptible ou en dégradant très peu la qualité des images perçues par l'utilisateur légal du terminal 8.

Variantes du point d'intérêt :
D'autres méthodes pour établir les coordonnées du point d'intérêt sont possibles. Par exemple, les coordonnées du point d'intérêt peuvent être déterminées à partir de l'acquisition d'une commande vocale par le terminal. Par exemple, quand le terminal acquiert la commande vocale « Regarde derrière », la position actuelle du point d'intérêt est déplacée horizontalement de 180° de sorte que ce sont les versions haute qualité des portions situées derrière l'utilisateur qui sont maintenant déchiffrées et affichées.

De façon générale, à partir du moment où il existe un capteur qui mesure un déplacement d'une partie quelconque du corps de l'utilisateur, telle que les pupilles de l'utilisateur, les mesures de ce capteur peuvent être utilisées, seules ou en combinaison avec les mesures d'un autre capteur, pour déterminer les coordonnées du point d'intérêt. Par exemple, l'utilisateur déplace, avec sa main, un joystick et les coordonnées du point d'intérêt sont modifiées en fonction des mesures du déplacement de ce joystick. Ainsi, dans cette variante, les coordonnées du point d'intérêt sont fonction du déplacement de la main de l'utilisateur. Le joystick peut être remplacé par un appareil directement déplaçable à la main par l'utilisateur et équipé d'une centrale inertielle qui mesure les déplacements dans l'espace de cet appareil. Par exemple, cet appareil est un smartphone ou une tablette. Dans ce dernier cas, l'écran sur lequel est affiché l'image peut être celui de ce smartphone ou de cette tablette.

Les coordonnées du point d'intérêt peuvent aussi être obtenues en fonction du déplacement d'autres utilisateurs regardant en même temps la même vidéo ou ayant déjà regardé cette vidéo. Dans ce cas, ces mesures sont par exemple obtenues par l'intermédiaire du réseau 16 et transmises au positionneur 51. De telles mesures sont par exemple utilisées pour prédire la position du point vers lequel l'utilisateur va pointer son regard.

Dans d'autres modes de réalisation, les coordonnées du point d'intérêt peuvent aussi être établies indépendamment des mesures d'un déplacement de l'utilisateur. Par exemple, dans le cas d'une vidéo d'un match de football, un module logiciel extrait automatiquement les coordonnées du ballon dans l'image. Ce module logiciel peut être exécuté par le générateur 6. Les coordonnées extraites sont ensuite transmises et utilisées par le positionneur 51 pour établir les coordonnées du point d'intérêt. Par exemple, les coordonnées du point d'intérêt sont égales à ces coordonnées extraites.

Dans une autre variante, pour chaque image, le positionneur établit non pas les coordonnées d'un seul point mais les coordonnées de plusieurs points d'intérêt. Ainsi, les version haute qualité de l'image sont construites pour toutes les portions de l'image se situant autour d'un de ces points d'intérêt. L'utilisation simultanée de plusieurs points d'intérêt peut s'avérer utile lorsque l'amplitude du déplacement du point d'intérêt est importante pendant un intervalle de temps correspondant à celui d'un groupe d'images. Dans ce cas, il peut être utile de prédire la trajectoire du point d'intérêt pendant cet intervalle de temps. Ensuite, les coordonnées de plusieurs points d'intérêt situés le long de la trajectoire prédite sont établies de manière à déchiffrer les variantes VHQⱼ associées à tous les carreaux situés le long de cette trajectoire.

Variantes des versions haute qualité et dégradée :
Les carreaux ne sont pas nécessairement carrés ou rectangulaires. D'autres formes sont possibles. Par exemple, les carreaux peuvent être triangulaires ou hexagonaux ou toutes autres formes à partir desquelles il est possible de paver la totalité de la surface de l'image sans laisser d'espace entre ces carreaux. Il est aussi possible d'utiliser un pavage dans lequel les carreaux n'ont pas tous les mêmes dimensions. Par exemple, les carreaux sont plus petits au centre de l'image et plus grands sa périphérie.

Le pavage des images d'une vidéo n'est pas nécessairement constant pendant toute la durée de la vidéo. Par exemple, le nombre de carreaux N_{c} peut être modifié d'une image à l'autre ou d'un groupe d'images à l'autre. De même, il est possible de modifier la forme des carreaux ou le pavage utilisé d'une image à l'autre ou d'un groupe d'images à l'autre.

La version dégradée peut être obtenue de différentes façons. Par exemple, elle peut être obtenue en diminuant la résolution temporelle ou colorimétrique de la version haute qualité. Diminuer la résolution colorimétrique consiste à limiter la profondeur, c'est-à-dire le nombre total de couleurs différentes qu'il est possible de coder. Par exemple, dans la version haute qualité, les couleurs sont codées sur 32 bits tandis que dans la version dégradée, les couleurs sont codées sur seulement 16 bits. Diminuer la résolution temporelle consiste à diminuer la fréquence de rafraîchissement d'une portion de l'image. Par exemple, si la fréquence de rafraîchissement des versions haute qualité est notée f_{HQ}, alors la fréquence de rafraîchissement f_{D} des portions de l'image à l'intérieur des carreaux non-sélectionnés est strictement inférieure à cette fréquence f_{HQ}. Par exemple, dans une image sur deux, la variante dégradée est identique à la variante haute qualité. Dans les autres images, la variante dégradée est identique à la variante dégradée de l'image immédiatement précédente. Dans ces conditions, la version haute qualité est rafraîchie à la fréquence f_{HQ} tandis que la version dégradée est rafraîchie à la fréquence f_{D} = f_{HQ}/2.

**On** peut également combiner une ou plusieurs des modifications suivantes pour obtenir la variante dégradée : une diminution de la résolution spatiale, une diminution de la résolution colorimétrique et une diminution de la résolution temporelle.

La variante dégradée peut aussi être obtenue par d'autres modifications qu'une diminution de la résolution spatiale, colorimétrique ou temporelle. Par exemple, une version dégradée d'une portion de l'image située à l'intérieur d'un carreau est obtenue en moyennant les couleurs des pixels des versions haute qualité de l'image situées à l'intérieur des carreaux qui touche ce carreau. Dans ce cas, la variante dégradée varie en fonction du contenu des variantes haute qualité. Toutefois, la version dégradée d'une portion de l'image contient toujours moins d'informations que la version haute qualité affichable à l'intérieur du même carreau.

Dans une autre alternative, la version dégradée à afficher à l'intérieur de chaque carreaux Cⱼ est construite directement à partir du contenu de la variante VDⱼ chiffrée sans déchiffrer cette variante. Dans ce cas, l'image déchiffrée et décompressée contenue dans le flux vidéo 57 comprend à la fois des portions déchiffrées et décompressées situées à l'intérieur des carreaux sélectionnés et des portions non-déchiffrées situées à l'intérieur des carreaux non-sélectionnés. Dans cette alternative, il n'est pas nécessaire de déchiffrer les variantes VDⱼ associées à chaque carreau non-sélectionné.

Dans un autre mode de réalisation, la version dégradée est omise. Par exemple, c'est possible si le contenu de la version dégradée n'est pas fonction du contenu du flux vidéo et, en particulier, du contenu des versions haute qualité. Dans ce cas, c'est le lecteur 10 qui construit la version dégradée des portions d'image en utilisant des informations préenregistrées dans sa mémoire 26. Par exemple, la version dégradée est une portion d'image constante qui ne varie pas dans le temps. Cette portion d'image constante est, par exemple, une couleur uniforme. Dans ce cas, la version dégradée peut avoir la même résolution spatiale, colorimétrique et temporelle que la version haute qualité. Toutefois, la version dégradée se distingue de la version haute qualité par le fait qu'elle ne contient aucune information qui permettrait de reconstruire la version haute qualité.

Les différentes façons décrites ici pour obtenir une version dégradée codée par la variante dégradée peuvent être combinées entre elles.

Dans un autre mode de réalisation, pour économiser de la bande passante, la variante haute qualité contient uniquement les informations qui, lorsqu'elles sont combinées avec les informations contenues dans la variante dégradée, permettent de construire la version haute qualité de la portion d'image. Typiquement, ces informations sont appelées « rehausse ». Pour cela, le générateur 6 met en œuvre un encodage par carreaux et, en plus, un encodage hiérarchique. L'encodage hiérarchique est également connu sous le terme de « codage vidéo scalable ». Une telle possibilité est prévue et disponible dans les générateurs conformes à la norme H.265. Dans la norme H.265, ceci est connu sous l'acronyme SHVC (« Scalable High efficiency Video Coding »). Ainsi, le générateur 6 génère pour chaque carreau de chaque image un flux de base et un flux de rehausse. Les variantes dégradées contiennent le flux de base et les variantes haute qualité contiennent le flux de rehausse. Dans ce cas, contrairement au mode de réalisation précédent, pour obtenir la version haute qualité d'une portion d'image, le sous-module 54 déchiffre à la fois la variante dégradée et la variante haute qualité associées aux carreaux sélectionnés pour obtenir à la fois le flux de base et le flux de rehausse. Pour les portions d'image situées à l'intérieur de carreaux non sélectionnés, seule la variante dégradée est déchiffrée.

Il est aussi possible de mettre en œuvre la compression et le chiffrement par carreaux uniquement pour les variantes haute qualité mais pas pour les variantes dégradées. Dans ce cas, la version dégradée des images n'est pas divisée en carreaux mais compressée et chiffrée en un seul morceau. À l'inverse, la version haute qualité des images est divisée en carreaux. Chacun de ces carreaux est associé à une variante haute qualité respective. Ici, de préférence, chaque variante haute qualité est une rehausse qui permet de transformer la version dégradée de la même portion de l'image en une version haute qualité. Dans ce cas, l'image dégradée est d'abord déchiffrée puis décompressée pour obtenir une version dégradée de la totalité de l'image à afficher et donc de chacune des portions de cette image. Ensuite, en fonction de la position du point d'intérêt, certaines variantes haute qualité sont déchiffrées et décompressées pour obtenir les rehausses qui permettent de faire passer certaines portions de l'image dégradée en version haute qualité.

En variante, la variante haute qualité VHQⱼ est compressée en prenant en compte le contenu de la variante VDⱼ. Ceci permet d'accroître le taux de compression puisque les redondances entre les variantes VHQⱼ et VDⱼ peuvent être éliminées. Par contre, lors de la décompression du flux vidéo 4, pour décompresser la variante VHQⱼ, le lecteur 10 doit au préalable déchiffrer et décompresser la variante VDⱼ. Le fait que la variante VDⱼ soit déchiffrée et décompressée, en plus de la variante VHQⱼ, ne nuit pas à la sécurité du procédé car cette variante VDⱼ correspond à la version dégradée de l'image.

Le nombre N_{V} de variantes associées à un carreau de l'image n'est pas limité à une variante haute qualité et une variante dégradée. Le nombre N_{V} peut être supérieur ou égal à trois. Par exemple, il est possible d'associer à un carreau Cⱼ de l'image, en plus des variantes VHQⱼ et VDⱼ, une variante VQMⱼ de qualité moyenne. La variante VQMⱼ code uniquement une version de qualité moyenne de la portion de l'image située à l'intérieur du carreau Cⱼ. Typiquement, la version de qualité moyenne a une résolution spatiale, temporelle ou colorimétrique moins bonne que celle de la version haute qualité mais meilleure que celle de la version dégradée. Par exemple, la version de qualité moyenne d'une portion de l'image située à l'intérieur d'un carreau est affichée en fonction de la distance d_{c} qui sépare le centre de ce carreau du point d'intérêt. À titre d'illustration, si la distance d_{c} est inférieure à un premier seuil prédéterminé S₁, c'est la variante VHQⱼ qui est déchiffrée et décompressée pour construire la portion d'image située à l'intérieur du carreau Cⱼ. Si la distance d_{c} est supérieure au seuil S₁ et inférieure à un seuil prédéterminé S₂ , c'est la variante VQMⱼ qui est déchiffrée et décompressée pour construire la portion d'image située à l'intérieur du carreau Cⱼ. Si la distance d_{c} est supérieure au seuil S₂, alors c'est la variante VDⱼ qui est déchiffrée et décompressée pour construire la portion d'image située à l'intérieur du carreau Cⱼ. Ainsi, on obtient des images dans lesquelles la qualité se dégrade au fur et à mesure que l'on s'éloigne du point d'intérêt. Cela limite le risque d'inconfort pour l'utilisateur.

En variante, la clé KHQⱼ est la même pour tous les carreaux Cⱼ d'une image. Par conséquent, dans ce mode de réalisation, l'identifiant KIDⱼ associé à chaque variante VHQⱼ peut être omis.

En variante, la variante VDⱼ n'est pas chiffrée et seule les variantes VHQⱼ sont chiffrées. Ainsi, il n'est pas nécessaire de déchiffrer les variantes dégradées pour construire la version dégradée d'une portion d'image.

### Variantes du système de génération et de lecture du flux vidéo.

De nombreux autres modes de réalisation du dispositif 12 d'affichage sont possibles. Par exemple, le dispositif 12 peut être remplacé par un écran et un projecteur qui projette les images du flux vidéo lu sur cet écran. De préférence, la surface de l'écran sera alors une demi-sphère ou une sphère ou un anneau entourant l'utilisateur.

Ce qui a été décrit s'applique à d'autre domaines que l'affichage stéréoscopique. Dans ces cas, le composeur construit par exemple une seule image et non pas deux comme précédemment décrit et l'image construite ne correspond pas forcément à une fraction seulement des images du flux vidéo lu. Dans ce dernier cas, le composeur n'a alors pas besoin de recevoir les coordonnées du point 98. Par exemple, cela s'applique au cas où l'écran entoure l'utilisateur comme dans le cas d'un écran sphérique ou hémisphérique. Cela s'applique aussi au cas d'un écran plat, dont les dimensions sont telles que l'utilisateur ne peut pas avoir une vision globale de sa surface.

L'ensemble 32 ou le dispositif 12 d'affichage peuvent être intégrés à l'intérieur du terminal 8. Ce sera par exemple le cas si le terminal 8 est une tablette ou un smartphone. L'ensemble 32 peut aussi être mécaniquement indépendant du dispositif 12 et du terminal 8.

L'agent DRM 50 peut être implémenté sous une forme matérielle tel qu'un coprocesseur de sécurité ou un processeur d'une carte puce.

Le système 2 peut être réalisé de manière à être conforme à d'autres normes que celles précédemment citées. Pour des applications particulières, il n'est pas non plus obligatoire que le système 2 soit compatible avec des normes existantes. Par exemple, dans une variante, le flux vidéo est compressé image par image de sorte que chaque groupe d'images ne contient qu'une seule image. Dans une autre variante, le flux vidéo est compressé en seul bloc, ce qui revient à avoir un seul groupe d'images comportant toutes les images de la vidéo. Enfin, dans une autre alternative, le groupe d'images n'est pas le plus petit groupe d'images fermé.

Autres variantes :
Les procédés décrits ici peuvent être mis en œuvre sur toutes les images de la vidéo ou pour une partie seulement de ces images. Par exemple, les procédés décrits ici sont mis en œuvre pendant certains intervalles de temps et désactivés pendant d'autres intervalles de temps. Lorsque les procédés décrits ici sont désactivés, les images de la vidéo ne sont par exemple pas chiffrées et compressées par carreaux.

## Revendications

1. Procédé de lecture d'un flux vidéo contenant des images compressées et chiffrées, **caractérisé en ce que** ce procédé comporte :
- la réception (92) d'un flux vidéo contenant des images compressées et chiffrées par carreaux, une image compressée et chiffrée par carreaux étant une image divisée en plusieurs carreaux contigus définis chacun par des coordonnées respectives dans l'image, la réunion de ces carreaux contigus formant un pavage de la surface totale de cette image, chaque carreau de l'image étant associé dans le flux vidéo à une première plage de bits, appelée « variante haute qualité », compressée et chiffrée, qui est la seule à coder les informations nécessaires pour construire une version dite « haute qualité » de la portion de l'image située à l'intérieur de ce carreau, cette variante haute qualité, compressée et chiffrée, étant apte à être déchiffrée et décompressée indépendamment des variantes haute qualité, compressées et chiffrées, associées à d'autres carreaux qui n'ont pas les mêmes coordonnées,
- pour chaque image compressée et chiffrée par carreaux :
• l'acquisition (94) des coordonnées des carreaux qui divisent l'image,
• l'acquisition (110) de coordonnées d'un point d'intérêt dans l'image,
• la sélection (112), à partir des coordonnées acquises des carreaux et du point d'intérêt, du ou des carreaux les plus proches du point d'intérêt, le nombre de carreaux ainsi sélectionnés étant strictement inférieur au nombre total de carreaux qui divisent cette image, de manière à obtenir des carreaux sélectionnés et des carreaux non sélectionnés,
- pour chaque carreau sélectionné, le déchiffrement (118) et la décompression (120) de la variante haute qualité, compressée et chiffrée, associée à ce carreau sélectionné, et pour chaque carreau non sélectionné, l'absence de déchiffrement de la variante haute qualité, compressée et chiffrée, associée à ce carreau non sélectionné, puis
- pour chaque image compressée et chiffrée par carreaux :
• la construction (130) de la version haute qualité pour chaque portion de cette image située à l'intérieur d'un carreau sélectionné à partir de la variante haute qualité déchiffrée et décompressée associée à ce carreau sélectionné,
• la construction (130) d'une version différente, dite « dégradée », pour chaque portion de cette image située à l'intérieur d'un carreau non sélectionné sans prendre en compte la variante haute qualité, compressée et chiffrée, associée à ce carreau non sélectionné, puis
• l'assemblage (132) de ces différentes portions d'image construites pour former l'image déchiffrée et décompressée du flux vidéo dans laquelle seules certaines portions, sélectionnées en fonction des coordonnées du point d'intérêt, contiennent la version haute qualité tandis que les autres portions contiennent la version dégradée,
dans lequel :
- le flux vidéo reçu (92) comporte en plus, associée à chacun des carreaux, une seconde plage de bits, appelée « variante dégradée », compressée et distincte de la variante haute qualité, compressée et chiffrée, associée à ce même carreau, cette variante dégradée compressée étant la seule à coder les informations nécessaires pour construire une version dite « dégradée » de la portion de l'image située à l'intérieur de ce carreau, cette variante dégradée compressée étant apte à être décompressée indépendamment des variantes dégradées compressées associées à d'autres carreaux qui n'ont pas les mêmes coordonnées et indépendamment de la variante haute qualité, compressée et chiffrée, associée au même carreau, la variante dégradée compressée codant des informations sur le contenu de la version haute qualité de la portion d'image située à l'intérieur du carreau auquel elle est associée mais en quantité insuffisante pour permettre à elle seule de reconstruire cette version haute qualité,
- pour chaque carreau non sélectionné, le procédé comporte la décompression (126) de la variante dégradée compressée associée à ce carreau non sélectionné dans le flux vidéo reçu, puis
- la construction (130) de la version dégradée de chaque portion de l'image située à l'intérieur d'un carreau non sélectionné, comporte la construction de cette version dégradée à partir de la variante dégradée décompressée associée à ce carreau non sélectionné.

2. Procédé selon la revendication 1, dans laquelle le procédé comporte :
- la mesure (96), à l'aide d'un capteur électronique, d'un déplacement d'un utilisateur du terminal, et
- l'établissement (97), à partir du déplacement mesuré, des coordonnées du point d'intérêt acquis par ce terminal.

3. Procédé selon la revendication 2, dans lequel le procédé comporte :
- l'affichage (136) des images déchiffrées et décompressées du flux vidéo sur un écran par rapport auquel la position de l'utilisateur est connue,
- la mesure (96) d'un déplacement de l'utilisateur comporte la mesure d'au moins une grandeur physique représentative de la direction dans laquelle l'utilisateur pointe son regard, et
- l'établissement (97), à partir du déplacement mesuré et de la position connue de l'utilisateur par rapport à l'écran, des coordonnées du point situé à l'intersection entre l'écran et la direction dans laquelle l'utilisateur pointe son regard, les coordonnées du point d'intérêt étant égales aux coordonnées de ce point d'intersection dans le plan de l'image.

4. Procédé selon l'une quelconque des revendications précédentes, dans lequel la version dégradée codée par la variante dégradée présente une résolution spatiale, colorimétrique ou temporelle strictement inférieure à celle de la version haute qualité codée par la variante haute qualité associée au même carreau.

5. Procédé selon l'une quelconque des revendications précédentes, dans lequel le procédé comporte :
- la composition (134), à partir des seules versions haute qualité de l'image déchiffrée et décompressée, d'une image droite pour un œil droit de l'utilisateur et d'une image gauche différente pour un œil gauche de l'utilisateur, puis
- l'affichage (136) des images droite et gauche, respectivement, sur des écrans droit et gauche d'une paire de lunettes à vision stéréoscopique portée par un utilisateur.

6. Procédé de génération d'un flux vidéo contenant des images compressées et chiffrées, ce procédé comportant :
- la réception (62) d'un flux vidéo initial à compresser et à chiffrer,
- pour chaque image à chiffrer et à compresser du flux vidéo initial reçu, l'acquisition (60) des coordonnées de plusieurs carreaux contigus qui forment, lorsqu'ils sont réunis, un pavage de la surface totale de cette image,
- pour chaque carreau, les étapes suivantes :
• l'acquisition (62) d'une plage de bits, appelée « variante haute qualité », qui est la seule à coder les informations nécessaires pour construire une version haute qualité d'une portion de l'image située à l'intérieur de ce carreau, puis
• la compression (66) de cette variante haute qualité acquise pour ce carreau sans prendre en compte les variantes haute qualité acquises pour d'autres carreaux qui n'ont pas les mêmes coordonnées, puis
• le chiffrement (72) de cette variante haute qualité compressée sans prendre en compte les variantes haute qualité acquises pour d'autres carreaux qui n'ont pas les mêmes coordonnées, et l'association (78) à ce carreau, dans le flux vidéo généré, de cette variante haute qualité, compressée et chiffrée, de manière à obtenir une variante haute qualité, compressée et chiffrée, apte à être déchiffrée et décompressée indépendamment des autres variantes haute qualité, compressées et chiffrées, acquises pour d'autres carreaux qui n'ont pas les mêmes coordonnées
**caractérisé en ce que** le procédé comporte en plus :
- l'acquisition (62) d'une seconde plage de bits, appelée « variante dégradée », distincte de la variante haute qualité acquise pour ce même carreau et l'association à ce carreau, dans le flux vidéo généré, de cette variante dégradée en plus de la variante haute qualité, la variante dégradée étant la seule à coder les informations nécessaires pour construire une version dite « dégradée » de la portion de l'image située à l'intérieur de ce carreau, la variante dégradée codant des informations sur le contenu de la version haute qualité de la portion d'image située à l'intérieur du carreau auquel elle est associée mais en quantité insuffisante pour permettre à elle seule de reconstruire cette version haute qualité, puis
- la compression (68) de la variante dégradée sans prendre en compte les variantes haute qualité ou dégradées acquises pour d'autres carreaux qui n'ont pas les mêmes coordonnées et sans prendre en compte la variante haute qualité acquise pour ce même carreau, puis
- le chiffrement (74) de la variante dégradée compressée pour ce carreau sans prendre en compte les variantes haute qualité et dégradées acquises pour d'autres carreaux qui n'ont pas les mêmes coordonnées et sans prendre en compte la variante haute qualité acquise pour ce même carreau.

7. Procédé selon l'une quelconque des revendications précédentes, dans lequel les images compressées et chiffrées codent chacune des vues prises dans toutes les directions contenues à l'intérieur d'un cône de vision dont l'angle au sommet est supérieur à 100°.

8. Support (22, 26) d'enregistrement d'informations, **caractérisé en ce qu'**il comporte des instructions pour la mise en œuvre d'un procédé conforme à l'une quelconque des revendications précédentes, lorsque ces instructions sont exécutées par un microprocesseur électronique (20, 24).

9. Lecteur électronique d'un flux vidéo contenant des images compressées et chiffrées, ce lecteur comportant un microprocesseur programmable (24) programmé pour :
- recevoir un flux vidéo contenant des images compressées et chiffrées par carreaux, une image compressée et chiffrée par carreaux étant une image divisée en plusieurs carreaux contigus définis chacun par des coordonnées respectives dans l'image, la réunion de ces carreaux contigus formant un pavage de la surface totale de cette image, chaque carreau de l'image étant associé dans le flux vidéo à une première plage de bits, appelée « variante haute qualité », compressée et chiffrée, qui est la seule à coder les informations nécessaires pour construire une version dite « haute qualité » de la portion de l'image située à l'intérieur de ce carreau, cette variante haute qualité, compressée et chiffrée, étant apte à être déchiffrée et décompressée indépendamment des variantes haute qualité, compressées et chiffrées, associées à d'autres carreaux qui n'ont pas les mêmes coordonnées,
- pour chaque image compressée et chiffrée par carreaux :
• acquérir des coordonnées des carreaux qui divisent l'image,
• acquérir des coordonnées d'un point d'intérêt dans l'image,
• sélectionner, à partir des coordonnées acquises des carreaux et du point d'intérêt, le ou les carreaux les plus proches du point d'intérêt, le nombre de carreaux ainsi sélectionnés étant strictement inférieur au nombre total de carreaux qui divisent cette image, de manière à obtenir des carreaux sélectionnés et des carreaux non sélectionnés,
- pour chaque carreau sélectionné, déchiffrer et décompresser la variante haute qualité, compressée et chiffrée, associée à ce carreau sélectionné, et pour chaque carreau non sélectionné, l'absence de déchiffrement de la variante haute qualité, compressée et chiffrée, associée à ce carreau non sélectionné, puis
- pour chaque image compressée et chiffrée par carreaux :
• construire la version haute qualité pour chaque portion de cette image située à l'intérieur d'un carreau sélectionné à partir de la variante haute qualité déchiffrée et décompressée associée à ce carreau sélectionné,
• construire une version différente, dite « dégradée », pour chaque portion de cette image située à l'intérieur d'un carreau non sélectionné sans prendre en compte la variante haute qualité, compressée et chiffrée, associée à ce carreau non sélectionné, puis
• assembler ces différentes portions d'image construites pour former l'image déchiffrée et décompressée du flux vidéo dans laquelle seules certaines portions, sélectionnées en fonction des coordonnées du point d'intérêt, contiennent la version haute qualité tandis que les autres portions contiennent la version dégradée,
**caractérisé en ce que** le microprocesseur programmable (24) est également programmé pour:
- recevoir le flux vidéo qui comporte en plus, associée à chacun des carreaux, une seconde plage de bits, appelée « variante dégradée », compressée et distincte de la variante haute qualité, compressée et chiffrée, associée à ce même carreau, cette variante dégradée compressée étant la seule à coder les informations nécessaires pour construire une version dite « dégradée » de la portion de l'image située à l'intérieur de ce carreau, cette variante dégradée compressée étant apte à être décompressée indépendamment des variantes dégradées compressées associées à d'autres carreaux qui n'ont pas les mêmes coordonnées et indépendamment de la variante haute qualité, compressée et chiffrée, associée au même carreau, la variante dégradée compressée codant des informations sur le contenu de la version haute qualité de la portion d'image située à l'intérieur du carreau auquel elle est associée mais en quantité insuffisante pour permettre à elle seule de reconstruire cette version haute qualité,
- pour chaque carreau non sélectionné, décompresser la variante dégradée compressée associée à ce carreau non sélectionné dans le flux vidéo reçu, puis
- construire la version dégradée de chaque portion de l'image située à l'intérieur d'un carreau non sélectionné à partir de la variante dégradée décompressée associée à ce carreau non sélectionné.

10. Générateur d'un flux vidéo contenant des images compressées et chiffrées, ce générateur comportant un microprocesseur programmable (20) programmé pour :
- recevoir un flux vidéo initial à compresser et à chiffrer,
- pour chaque image à chiffrer et à compresser du flux vidéo initial reçu, acquérir des coordonnées de plusieurs carreaux contigus qui forment, lorsqu'ils sont réunis, un pavage de la surface totale de cette image,
- pour chaque carreau, exécuter les étapes suivantes :
• l'acquisition d'une plage de bits, appelée « variante haute qualité », qui est la seule à coder les informations nécessaires pour construire une version haute qualité d'une portion de l'image située à l'intérieur de ce carreau, puis
• la compression de cette variante haute qualité acquise pour ce carreau sans prendre en compte les variantes haute qualité acquises pour d'autres carreaux qui n'ont pas les mêmes coordonnées, puis
• le chiffrement de cette variante haute qualité compressée sans prendre en compte les variantes haute qualité acquises pour d'autres carreaux qui n'ont pas les mêmes coordonnées, et l'association à ce carreau, dans le flux vidéo généré, de cette variante haute qualité, compressée et chiffrée, de manière à obtenir une variante haute qualité, compressée et chiffrée, apte à être déchiffrée et décompressée indépendamment des autres variantes haute qualité, compressées et chiffrées, acquises pour d'autres carreaux qui n'ont pas les mêmes coordonnées,
**caractérisé en ce que** le microprocesseur est également programmé pour exécuter les étapes suivantes pour chaque carreau :
- l'acquisition d'une seconde plage de bits, appelée « variante dégradée », distincte de la variante haute qualité acquise pour ce même carreau et l'association à ce carreau, dans le flux vidéo généré, de cette variante dégradée en plus de la variante haute qualité, la variante dégradée étant la seule à coder les informations nécessaires pour construire une version dite « dégradée » de la portion de l'image située à l'intérieur de ce carreau, la variante dégradée codant des informations sur le contenu de la version haute qualité de la portion d'image située à l'intérieur du carreau auquel elle est associée mais en quantité insuffisante pour permettre à elle seule de reconstruire cette version haute qualité, puis
- la compression de la variante dégradée sans prendre en compte les variantes haute qualité ou dégradées acquises pour d'autres carreaux qui n'ont pas les mêmes coordonnées et sans prendre en compte la variante haute qualité acquise pour ce même carreau, puis
- le chiffrement de la variante dégradée compressée pour ce carreau sans prendre en compte les variantes haute qualité et dégradées acquises pour d'autres carreaux qui n'ont pas les mêmes coordonnées et sans prendre en compte la variante haute qualité acquise pour ce même carreau..

## Patentansprüche

1. Verfahren zum Lesen eines verschlüsselte und komprimierte Bilder enthaltenden Videostroms, **dadurch gekennzeichnet, dass** dieses Verfahren aufweist:
- den Empfang (92) eines kachelweise komprimierte und verschlüsselte Bilder enthaltenden Videostroms, wobei ein kachelweise komprimiertes und verschlüsseltes Bild ein in mehrere aneinandergrenzende Kacheln aufgeteiltes Bild ist, die je durch jeweilige Koordinaten im Bild definiert sind, wobei die Vereinigung dieser aneinandergrenzenden Kacheln eine Kachelung der Gesamtfläche dieses Bilds bildet, wobei jede Kachel des Bilds im Videostrom einem "Variante hoher Qualität" genannten komprimierten und verschlüsselten ersten Bitbereich zugeordnet ist, der der einzige ist, der die notwendigen Informationen codiert, um eine so genannte Version "hoher Qualität" des Teils des Bilds zu konstruieren, der sich im Inneren dieser Kachel befindet, wobei diese komprimierte und verschlüsselte Variante hoher Qualität unabhängig von den komprimierten und verschlüsselten Varianten hoher Qualität entschlüsselt und dekomprimiert werden kann, die anderen Kacheln zugeordnet sind, die nicht die gleichen Koordinaten haben,
- für jedes kachelweise komprimierte und verschlüsselte Bild:
• die Erfassung (94) der Koordinaten der das Bild aufteilenden Kacheln,
• die Erfassung (110) von Koordinaten eines interessierenden Punkts im Bild,
• die Auswahl (112), ausgehend von den erfassten Koordinaten der Kacheln und des interessierenden Punkts, der Kachel oder Kacheln, die dem interessierenden Punkt am nächsten sind, wobei die Anzahl von so ausgewählten Kacheln strikt geringer ist als die Gesamtanzahl von Kacheln, die dieses Bild aufteilen, um ausgewählte Kacheln und nicht ausgewählte Kacheln zu erhalten,
- für jede ausgewählte Kachel, die Entschlüsselung (118) und Dekomprimierung 120) der dieser ausgewählten Kachel zugeordneten komprimierten und verschlüsselten Variante hoher Qualität, und für jede nicht ausgewählte Kachel die Abwesenheit der Entschlüsselung der dieser nicht ausgewählten Kachel zugeordneten komprimierten und verschlüsselten Variante hoher Qualität, dann
- für jedes kachelweise komprimierte und verschlüsselte Bild:
• die Konstruktion (130) der Version hoher Qualität für jeden Teil dieses Bilds, der sich innerhalb einer Kachel befindet, die ausgehend von der dieser ausgewählten Kachel zugeordneten entschlüsselten und dekomprimierten Variante hoher Qualität ausgewählt wird,
• die Konstruktion (130) einer anderen, "eingeschränkt" genannten Version für jeden Teil dieses Bilds, der sich innerhalb einer nicht ausgewählten Kachel befindet, ohne Berücksichtigung der dieser nicht ausgewählten Kachel zugeordneten komprimierten und verschlüsselten Variante hoher Qualität, dann
• die Zusammenfügung (132) dieser verschiedenen Bildteile, die konstruiert sind, um das entschlüsselte und dekomprimierte Bild des Videostroms zu bilden, in dem nur bestimmte Teile, die abhängig von den Koordinaten des interessierenden Punkts ausgewählt werden, die Version hoher Qualität enthalten, während die anderen Teile die eingeschränkte Version enthalten,
wobei:
- der empfangene Videostrom (92) außerdem jeder der Kacheln zugeordnet einen "eingeschränkte Variante" genannten zweiten Bitbereich aufweist, komprimiert und anders als die dieser gleichen Kachel zugeordnete komprimierte und verschlüsselte Variante hoher Qualität, wobei diese komprimierte eingeschränkte Variante die einzige ist, die die notwendigen Informationen codiert, um eine so genannte "eingeschränkte" Version des Teils des Bilds zu konstruieren, der sich innerhalb dieser Kachel befindet, wobei diese komprimierte eingeschränkte Variante fähig ist, unabhängig von den komprimierten eingeschränkten Varianten, die anderen Kacheln zugeordnet sind, die nicht die gleichen Koordinaten haben, und unabhängig von der dieser gleichen Kachel zugeordneten komprimierten und verschlüsselten Variante hoher Qualität dekomprimiert zu werden, wobei die komprimierte eingeschränkte Variante Informationen über den Inhalt der Version hoher Qualität des Bildteils codiert, der sich innerhalb der Kachel befindet, der sie zugeordnet ist, aber in unzureichender Menge, um es alleine zu ermöglichen, diese Version hoher Qualität zu rekonstruieren,
- für jede nicht ausgewählte Kachel das Verfahren die Dekomprimierung (126) der komprimierten eingeschränkten Variante aufweist, die dieser nicht ausgewählten Kachel im empfangenen Videostrom zugeordnet ist, dann
- die Konstruktion (130) der eingeschränkten Version jedes Teils des Bilds, der sich innerhalb einer nicht ausgewählten Kachel befindet, die Konstruktion dieser eingeschränkten Version ausgehend von der dieser nicht ausgewählten Kachel zugeordneten dekomprimierten eingeschränkten Variante aufweist.

2. Verfahren nach Anspruch 1, wobei das Verfahren aufweist:
- die Messung (96), mit Hilfe eines elektronischen Sensors, einer Bewegung eines Benutzers des Endgeräts, und
- die Erstellung (97), ausgehend von der gemessenen Bewegung, der Koordinaten des von diesem Endgerät erfassten interessierenden Punkts.

3. Verfahren nach Anspruch 2, wobei das Verfahren aufweist:
- die Anzeige (136) der entschlüsselten und dekomprimierten Bilder des Videostroms auf einem Bildschirm, bezüglich dessen die Position des Benutzers bekannt ist,
- die Messung (96) einer Bewegung des Benutzers weist die Messung mindestens einer physikalischen Größe auf, die für die Richtung repräsentativ ist, in die der Benutzer seinen Blick richtet, und
- die Erstellung (97), ausgehend von der gemessenen Bewegung und der bekannten Position des Benutzers bezüglich des Bildschirms, der Koordinaten des Punkts, der sich an der Schnittstelle zwischen dem Bildschirm und der Richtung befindet, in die der Benutzer seinen Blick richtet, wobei die Koordinaten des interessierenden Punkts gleich den Koordinaten dieses Schnittpunkts in der Ebene des Bilds sind.

4. Verfahren nach einem der vorhergehenden Ansprüche, wobei die von der eingeschränkten Variante codierte eingeschränkte Version eine räumliche, farbmetrische oder zeitliche Auflösung strikt niedriger als diejenige der Version hoher Qualität aufweist, die von der der gleichen Kachel zugeordneten Variante hoher Qualität codiert wird.

5. Verfahren nach einem der vorhergehenden Ansprüche, wobei das Verfahren aufweist:
- die Komposition (134), ausgehend nur von den Versionen hoher Qualität des entschlüsselten und dekomprimierten Bilds, eines rechten Bilds für ein rechtes Auge des Benutzers und eines anderen linken Bilds für ein linkes Auge des Benutzers, dann
- die Anzeige (136) der rechten bzw. linken Bilder auf rechten und linken Bildschirmen einer von einem Benutzer getragenen Brille mit stereoskopischem Sehen.

6. Verfahren zur Erzeugung eines komprimierte und verschlüsselte Bilder enthaltenden Videostroms, wobei dieses Verfahren aufweist:
- den Empfang (62) eines zu komprimierenden und zu verschlüsselnden ursprünglichen Videostroms,
- für jedes zu verschlüsselnde und zu komprimierende Bild des empfangenen ursprünglichen Videostroms, die Erfassung (60) der Koordinaten mehrerer aneinandergrenzender Kacheln, die, wenn sie vereint sind, eine Kachelung der Gesamtfläche dieses Bilds bilden,
- für jede Kachel die folgenden Schritte:
• die Erfassung (62) eines "Variante hoher Qualität" genannten Bitbereichs, der alleine die notwendigen Informationen codiert, um eine Version hoher Qualität eines Teils des Bilds zu konstruieren, der sich innerhalb dieser Kachel befindet, dann
• die Komprimierung (66) dieser für diese Kachel erfassten Variante hoher Qualität ohne Berücksichtigung der Varianten hoher Qualität, die für andere Kacheln erfasst werden, die nicht die gleichen Koordinaten haben, dann
• die Verschlüsselung (72) dieser komprimierten Variante hoher Qualität ohne Berücksichtigung der Varianten hoher Qualität, die für andere Kacheln erfasst werden, die nicht die gleichen Koordinaten haben, und die Zuordnung (78) zu dieser Kachel, im erzeugten Videostrom, dieser komprimierten und verschlüsselten Variante hoher Qualität, um eine komprimierte und verschlüsselte Variante hoher Qualität zu erhalten, die fähig ist, unabhängig von den anderen komprimierten und verschlüsselten Varianten hoher Qualität entschlüsselt und dekomprimiert zu werden, die für andere Kacheln erfasst werden, die nicht die gleichen Koordinaten haben,
**dadurch gekennzeichnet, dass** das Verfahren außerdem aufweist:
- die Erfassung (62) eines "eingeschränkte Variante" genannten zweiten Bitbereichs, anders als die für diese gleiche Kachel erfasste Variante hoher Qualität, und die Zuordnung zu dieser Kachel, im erzeugten Videostrom, dieser eingeschränkten Variante zusätzlich zur Variante hoher Qualität, wobei nur die eingeschränkte Variante die Informationen codiert, die notwendig sind, um eine so genannte "eingeschränkte" Version des Teils des Bilds zu konstruieren, der sich innerhalb dieser Kachel befindet, wobei die eingeschränkte Variante Informationen über den Inhalt der Version hoher Qualität des Bildteils codiert, der sich innerhalb der Kachel befindet, der sie zugeordnet ist, aber in unzureichender Menge, um es alleine zu ermöglichen, diese Version hoher Qualität zu rekonstruieren, dann
- die Komprimierung (68) der eingeschränkten Variante ohne Berücksichtigung der Varianten hoher Qualität oder eingeschränkten Varianten, die für andere Kacheln erfasst werden, die nicht die gleichen Koordinaten haben, und ohne Berücksichtigung der für diese gleiche Kachel erfassten Variante hoher Qualität, dann
- die Verschlüsselung (74) der komprimierten eingeschränkten Variante für diese Kachel ohne Berücksichtigung der Varianten hoher Qualität und eingeschränkten Varianten, die für andere Kacheln erfasst werden, die nicht die gleichen Koordinaten haben, und ohne Berücksichtigung der für diese gleiche Kachel erfassten Variante hoher Qualität.

7. Verfahren nach einem der vorhergehenden Ansprüche, wobei die komprimierten und verschlüsselten Bilder je Ansichten codieren, die in allen Richtungen aufgenommen werden, die innerhalb eines Sichtkegels liegen, dessen Scheitelwinkel größer als 100° ist.

8. Informationsspeicherträger (22, 26), **dadurch gekennzeichnet, dass** er Anweisungen zur Durchführung eines Verfahrens gemäß einem der vorhergehenden Ansprüche aufweist, wenn diese Anweisungen von einem elektronischen Mikroprozessor (20, 24) ausgeführt werden.

9. Elektronisches Lesegerät eines komprimierte und verschlüsselte Bilder enthaltenden Videostroms, wobei dieses Lesegerät einen programmierbaren Mikroprozessor (24) aufweist, der programmiert ist, um:
- einen kachelweise komprimierte und verschlüsselte Bilder enthaltenden Videostrom zu empfangen, wobei ein kachelweise komprimiertes und verschlüsseltes Bild ein in mehrere aneinandergrenzende Kacheln aufgeteiltes Bild ist, die je durch jeweilige Koordinaten im Bild definiert sind, wobei die Vereinigung dieser aneinandergrenzenden Kacheln eine Kachelung der Gesamtfläche dieses Bilds bildet, wobei jede Kachel des Bilds im Videostrom einem komprimierten und verschlüsselten ersten Bitbereich, "Variante hoher Qualität" genannt, zugeordnet ist, der der einzige ist, der die notwendigen Informationen codiert, um eine so genannte Version "hoher Qualität" des Teils des Bilds zu konstruieren, der sich im Inneren dieser Kachel befindet, wobei diese komprimierte und verschlüsselte Variante hoher Qualität fähig ist, unabhängig von den komprimierten und verschlüsselten Varianten hoher Qualität entschlüsselt und dekomprimiert zu werden, die anderen Kacheln zugeordnet sind, die nicht die gleichen Koordinaten haben,
- für jedes kachelweise komprimierte und verschlüsselte Bild:
• Koordinaten der Kacheln zu erfassen, die das Bild teilen,
• Koordinaten eines interessierenden Punkts im Bild zu erfassen,
• ausgehend von den erfassten Koordinaten der Kacheln und des interessierenden Punkts die Kachel oder Kacheln auszuwählen, die dem interessierenden Punkt am nächsten sind, wobei die Anzahl von so ausgewählten Kacheln strikt niedriger als die Gesamtanzahl von Kacheln ist, die dieses Bild aufteilen, um ausgewählte Kacheln und nicht ausgewählte Kacheln zu erhalten,
- für jede ausgewählte Kachel die dieser ausgewählten Kachel zugeordnete komprimierte und verschlüsselte Variante hoher Qualität zu entschlüsseln und zu dekomprimieren, und für jede nicht ausgewählte Kachel die Abwesenheit einer Entschlüsselung der komprimierten und verschlüsselten Variante hoher Qualität, die dieser nicht ausgewählten Kachel zugeordnet ist, dann
- für jedes kachelweise komprimierte und verschlüsselte Bild:
• die Version hoher Qualität für jeden Teil dieses Bilds zu konstruieren, der sich innerhalb einer ausgewählten Kachel befindet, ausgehend von der dieser ausgewählten Kachel zugeordneten entschlüsselten und dekomprimiertem Variante hoher Qualität,
• eine andere, "eingeschränkt" genannte Version für jeden Teil dieses Bilds zu konstruieren, der sich innerhalb einer nicht ausgewählten Kachel befindet, ohne Berücksichtigung der dieser nicht ausgewählten Kachel zugeordneten komprimierten und verschlüsselten Variante hoher Qualität, dann
• diese verschiedenen Bildteile, die konstruiert sind, um das entschlüsselte und dekomprimierte Bild des Videostroms zu bilden, zusammenzufügen, in dem nur bestimmte Teile, die abhängig von den Koordinaten des interessierenden Punkts ausgewählt werden, die Version hoher Qualität enthalten, während die anderen Teile die eingeschränkte Version enthalten,
**dadurch gekennzeichnet, dass** der programmierbare Mikroprozessor (24) ebenfalls programmiert ist, um:
- den Videostrom zu empfangen, der zusätzlich, jeder der Kacheln zugeordnet, einen zweiten Bitbereich aufweist, "eingeschränkte Variante" genannt, der komprimiert und anders als die komprimierte und verschlüsselte Variante hoher Qualität ist, die dieser gleichen Kachel zugeordnet ist, wobei diese komprimierte eingeschränkte Variante die einzige ist, die die notwendigen Informationen codiert, um eine so genannte "eingeschränkte" Version des Teils des Bilds zu konstruieren, der sich innerhalb dieser Kachel befindet, wobei diese komprimierte eingeschränkte Variante fähig ist, unabhängig von den komprimierten eingeschränkten Varianten, die anderen Kacheln zugeordnet sind, die nicht die gleichen Koordinaten haben, und unabhängig von der dieser gleichen Kachel zugeordneten komprimierten und verschlüsselten Variante hoher Qualität dekomprimiert zu werden, wobei die komprimierte eingeschränkte Variante Informationen über den Inhalt der Version hoher Qualität des Bildteils codiert, der sich im Inneren der Kachel befindet, der sie zugeordnet ist, aber in unzureichender Menge, um es alleine zu ermöglichen, diese Version hoher Qualität zu rekonstruieren,
- für jede nicht ausgewählte Kachel die dieser nicht ausgewählten Kachel im empfangenen Videostrom zugeordnete komprimierte eingeschränkte Variante zu dekomprimieren, dann
- die eingeschränkte Version jedes Teils des Bilds, der sich innerhalb einer nicht ausgewählten Kachel befindet, ausgehend von der dieser nicht ausgewählten Kachel zugeordneten dekomprimierten eingeschränkten Variante zu konstruieren.

10. Generator eines komprimierte und verschlüsselte Bilder enthaltenden Videostroms, wobei dieser Generator einen programmierbaren Mikroprozessor (20) aufweist, der programmiert ist, um:
- einen zu komprimierenden und zu verschlüsselnden ursprünglichen Videostrom zu empfangen,
- für jedes zu verschlüsselnde und zu komprimierende Bild des empfangenen ursprünglichen Videostroms Koordinaten mehrerer aneinandergrenzender Kacheln zu erfassen, die, wenn sie vereint sind, eine Kachelung der Gesamtfläche dieses Bilds bilden,
- für jede Kachel die folgenden Schritte auszuführen:
• die Erfassung eines Bitbereichs, "Variante hoher Qualität" genannt, der der einzige ist, der die notwendigen Informationen codiert, um eine Version hoher Qualität eines Teils des Bilds zu konstruieren, der sich innerhalb dieser Kachel befindet, dann
• die Komprimierung dieser für diese Kachel erfassten Variante hoher Qualität ohne Berücksichtigung der Varianten hoher Qualität, die für andere Kacheln erfasst werden, die nicht die gleichen Koordinaten haben, dann
• die Verschlüsselung dieser komprimierten Variante hoher Qualität ohne Berücksichtigung der Varianten hoher Qualität, die für andere Kacheln erfasst werden, die nicht die gleichen Koordinaten haben, und die Zuordnung zu dieser Kachel, im erzeugten Videostrom, dieser komprimierten und verschlüsselten Variante hoher Qualität, um eine komprimierte und verschlüsselte Variante hoher Qualität zu erhalten, die fähig ist, unabhängig von den anderen komprimierten und verschlüsselten Varianten hoher Qualität entschlüsselt und dekomprimiert zu werden, die für andere Kacheln erfasst werden, die nicht die gleichen Koordinaten haben,
**dadurch gekennzeichnet, dass** der Mikroprozessor ebenfalls programmiert ist, die folgenden Schritte für jede Kachel auszuführen:
- die Erfassung eines zweiten Bitbereichs, "eingeschränkte Variante" genannt, anders als die für diese gleiche Kachel erfasste Variante hoher Qualität, und die Zuordnung zu dieser Kachel, im erzeugten Videostrom, dieser eingeschränkten Variante zusätzlich zur Variante hoher Qualität, wobei die eingeschränkte Variante die einzige ist, die die notwendigen Informationen codiert, um eine so genannte "eingeschränkte" Version des Teils des Bilds zu konstruieren, der sich innerhalb dieser Kachel befindet, wobei die eingeschränkte Variante Informationen über den Inhalt der Version hoher Qualität des Bildteils codiert, der sich innerhalb der Kachel befindet, der sie zugeordnet ist, aber in unzureichender Menge, um es alleine zu ermöglichen, diese Version hoher Qualität zu rekonstruieren, dann
- die Komprimierung der eingeschränkten Variante ohne Berücksichtigung der Varianten hoher Qualität oder eingeschränkten Varianten, die für andere Kacheln erfasst werden, die nicht die gleichen Koordinaten haben, und ohne Berücksichtigung der für diese gleiche Kachel erfassten Variante hoher Qualität, dann
- die Verschlüsselung der komprimierten eingeschränkten Variante für diese Kachel ohne Berücksichtigung der Varianten hoher Qualität und eingeschränkten Varianten, die für andere Kacheln erfasst werden, die nicht die gleichen Koordinaten haben, und ohne Berücksichtigung der für diese gleiche Kachel erfassten Variante hoher Qualität.

## Claims

1. Method for reading a video stream containing compressed and encrypted images, **characterized in that** this method comprises:
- receiving (92) a video stream containing images compressed and encrypted in tiles, an image compressed and encrypted in tiles being an image divided into several contiguous tiles each defined by respective coordinates in the image, the combination of these contiguous tiles forming a paving of the total surface of this image, each tile of the image being associated in the video stream with a first, compressed and encrypted, range of bits, called "high-quality variant", which is the only one to code the information necessary to construct a so-called "high-quality" version of the portion of the image situated inside this tile, this compressed and encrypted high-quality variant being able to be decrypted and decompressed independently of the compressed and encrypted high-quality variants associated with other tiles which do not have the same coordinates,
- for each image compressed and encrypted in tiles:
• acquiring (94) the coordinates of the tiles which divide the image,
• acquiring (110) coordinates of a point of interest in the image,
• selecting (112), on the basis of the acquired coordinates of the tiles and of the point of interest, the tile or tiles closest to the point of interest, the number of tiles thus selected being strictly less than the total number of tiles which divide this image, so as to obtain selected tiles and unselected tiles,
- for each selected tile, decrypting (118) and decompressing (120) the compressed and encrypted high-quality variant associated with this selected tile, and for each unselected tile, not decrypting the compressed and encrypted high-quality variant associated with this unselected tile, and then
- for each image compressed and encrypted in tiles:
» constructing (130) the high-quality version for each portion of this image situated inside a selected tile on the basis of the decrypted and decompressed high-quality variant associated with this selected tile,
» constructing (130) a different version, called "downgraded" version, for each portion of this image situated inside an unselected tile without taking into account the compressed and encrypted high-quality variant associated with this unselected tile, and then
• assembling (132) these various constructed image portions so as to form the video stream's decrypted and decompressed image in which only certain portions, selected as a function of the coordinates of the point of interest, contain the high-quality version, while the other portions contain the downgraded version,
wherein:
- the received video stream (92) additionally comprises, associated with each of the tiles, a second range of bits, called "downgraded variant", compressed and distinct from the compressed and encrypted high-quality variant associated with this same tile, this compressed downgraded variant being the only one to code the information necessary to construct a so-called "downgraded" version of the portion of the image situated inside this tile, this compressed downgraded variant being able to be decompressed independently of the compressed downgraded variants associated with other tiles which do not have the same coordinates and independently of the compressed and encrypted high-quality variant associated with the same tile, the compressed downgraded variant coding information on the content of the high-quality version of the image portion situated inside the tile with which it is associated but of insufficient quantity to allow it to reconstruct this high-quality version on its own,
- for each unselected tile, the method comprises decompressing (126) the compressed downgraded variant associated with this unselected tile in the received video stream, and then
- constructing (130) the downgraded version of each portion of the image situated inside an unselected tile, comprising constructing this downgraded version on the basis of the decompressed downgraded variant associated with this unselected tile.

2. Method according to Claim 1, wherein the method comprises:
- measuring (96) a displacement of a user of the terminal with the aid of an electronic sensor, and
- establishing (97) the coordinates of the point of interest acquired by this terminal on the basis of the measured displacement.

3. Method according to Claim 2, wherein the method comprises:
- displaying (136) the decrypted and decompressed images of the video stream on a screen with respect to which the position of the user is known,
- measuring (96) a displacement of the user, comprising measuring at least one physical quantity representative of the direction in which the user is pointing his gaze, and
- establishing (97), on the basis of the measured displacement and of the known position of the user with respect to the screen, the coordinates of the point situated at the intersection between the screen and the direction in which the user is pointing his gaze, the coordinates of the point of interest being equal to the coordinates of this point of intersection in the plane of the image.

4. Method according to any one of the preceding claims, wherein the downgraded version coded by the downgraded variant exhibits a spatial, colorimetric or temporal resolution strictly less than that of the high-quality version coded by the high-quality variant associated with the same tile.

5. Method according to any one of the preceding claims, wherein the method comprises:
- composing (134), on the basis solely of the high-quality versions of the decrypted and decompressed image, a right-hand image for a right eye of the user and a different, left-hand image for a left eye of the user, and then
- displaying (136) the right-hand and left-hand images, respectively, on right-hand and left-hand screens of a pair of stereoscopic vision spectacles worn by a user.

6. Method for generating a video stream containing compressed and encrypted images, this method comprising:
- receiving (62) an initial video stream to be compressed and encrypted,
- for each image to be encrypted and compressed of the received initial video stream, acquiring (60) the coordinates of several contiguous tiles which, when they are combined, form a paving of the total surface of this image,
- for each tile, the following steps:
• acquiring (62) a range of bits, called "high-quality variant", which is the only one to code the information necessary to construct a high-quality version of a portion of the image situated inside this tile, and then
• compressing (66) this high-quality variant acquired for this tile without taking into account the high-quality variants acquired for other tiles which do not have the same coordinates, and then
• encrypting (72) this compressed high-quality variant without taking into account the high-quality variants acquired for other tiles which do not have the same coordinates, and associating (78) this compressed and encrypted high-quality variant with this tile in the generated video stream, in such a way as to obtain a compressed and encrypted high-quality variant able to be decrypted and decompressed independently of the other compressed and encrypted high-quality variants acquired for other tiles which do not have the same coordinates,
**characterized in that** the method additionally comprises:
- acquiring (62) a second range of bits, called "downgraded variant", distinct from the high-quality variant acquired for this same tile and associating this downgraded variant, in addition to the high-quality variant, with this tile in the generated video stream, the downgraded variant being the only one to code the information necessary to construct a so-called "downgraded" version of the portion of the image situated inside this tile, the downgraded variant coding information on the content of the high-quality version of the image portion situated inside the tile with which it is associated but of insufficient quantity to allow it to reconstruct this high-quality version on its own, and then
- compressing (68) the downgraded variant without taking into account the high-quality or downgraded variants acquired for other tiles which do not have the same coordinates and without taking into account the high-quality variant acquired for this same tile, and then
- encrypting (74) the compressed downgraded variant for this tile without taking into account the high-quality and downgraded variants acquired for other tiles which do not have the same coordinates and without taking into account the high-quality variant acquired for this same tile.

7. Method according to any one of the preceding claims, wherein the compressed and encrypted images code each of the views taken in all the directions contained inside a cone of vision whose vertex angle is greater than 100°.

8. Information recording medium (22, 26), **characterized in that** it comprises instructions for implementing a method according to any one of the preceding claims when these instructions are executed by an electronic microprocessor (20, 24).

9. Electronic reader for reading a video stream containing compressed and encrypted images, this reader comprising a programmable microprocessor (24) programmed to:
- receive a video stream containing images compressed and encrypted in tiles, an image compressed and encrypted in tiles being an image divided into several contiguous tiles each defined by respective coordinates in the image, the combination of these contiguous tiles forming a paving of the total surface of this image, each tile of the image being associated in the video stream with a first, compressed and encrypted, range of bits, called "high-quality variant", which is the only one to code the information necessary to construct a so-called "high-quality" version of the portion of the image situated inside this tile, this compressed and encrypted high-quality variant being able to be decrypted and decompressed independently of the compressed and encrypted high-quality variants associated with other tiles which do not have the same coordinates,
- for each image compressed and encrypted in tiles:
• acquire coordinates of the tiles which divide the image,
• acquire coordinates of a point of interest in the image,
• select, on the basis of the acquired coordinates of the tiles and of the point of interest, the tile or tiles closest to the point of interest, the number of tiles thus selected being strictly less than the total number of tiles which divide this image, so as to obtain selected tiles and unselected tiles,
- for each selected tile, decrypt and decompress the compressed and encrypted high-quality variant associated with this selected tile, and for each unselected tile, not decrypt the compressed and encrypted high-quality variant associated with this unselected tile, and then
- for each image compressed and encrypted in tiles:
• construct the high-quality version for each portion of this image situated inside a selected tile on the basis of the decrypted and decompressed high-quality variant associated with this selected tile,
• construct a different version, called "downgraded" version, for each portion of this image situated inside an unselected tile without taking into account the compressed and encrypted high-quality variant associated with this unselected tile, and then
• assemble these various constructed image portions so as to form the video stream's decrypted and decompressed image in which only certain portions, selected as a function of the coordinates of the point of interest, contain the high-quality version, while the other portions contain the downgraded version,
**characterized in that** the programmable microprocessor (24) is also programmed to:
- receive the video stream which additionally comprises, associated with each of the tiles, a second range of bits, called "downgraded variant", compressed and distinct from the compressed and encrypted high-quality variant associated with this same tile, this compressed downgraded variant being the only one to code the information necessary to construct a so-called "downgraded" version of the portion of the image situated inside this tile, this compressed downgraded variant being able to be decompressed independently of the compressed downgraded variants associated with other tiles which do not have the same coordinates and independently of the compressed and encrypted high-quality variant associated with the same tile, the compressed downgraded variant coding information on the content of the high-quality version of the image portion situated inside the tile with which it is associated but of insufficient quantity to allow it to reconstruct this high-quality version on its own,
- for each unselected tile, decompress the compressed downgraded variant associated with this unselected tile in the received video stream, and then
- construct the downgraded version of each portion of the image situated inside an unselected tile on the basis of the decompressed downgraded variant associated with this unselected tile.

10. Generator for generating a video stream containing compressed and encrypted images, this generator comprising a programmable microprocessor (20) programmed to:
- receive an initial video stream to be compressed and encrypted,
- for each image to be encrypted and compressed of the received initial video stream, acquire coordinates of several contiguous tiles which, when they are combined, form a paving of the total surface of this image,
- for each tile, execute the following steps:
• acquiring a range of bits, called "high-quality variant", which is the only one to code the information necessary to construct a high-quality version of a portion of the image situated inside this tile, and then
• compressing this high-quality variant acquired for this tile without taking into account the high-quality variants acquired for other tiles which do not have the same coordinates, and then
• encrypting this compressed high-quality variant without taking into account the high-quality variants acquired for other tiles which do not have the same coordinates, and associating this compressed and encrypted high-quality variant with this tile, in the generated video stream, in such a way as to obtain a compressed and encrypted high-quality variant able to be decrypted and decompressed independently of the other compressed and encrypted high-quality variants acquired for other tiles which do not have the same coordinates,
**characterized in that** the microprocessor is also programmed to execute the following steps for each tile:
- acquiring a second range of bits, called "downgraded variant", distinct from the high-quality variant acquired for this same tile and associating this downgraded variant, in addition to the high-quality variant, with this tile in the generated video stream, the downgraded version being the only one to code the information necessary to construct a so-called "downgraded" version of the portion of the image situated inside this tile, the downgraded variant coding information on the content of the high-quality version of the image portion situated inside the tile with which it is associated but of insufficient quantity to allow it to reconstruct this high-quality version on its own, and then
- compressing the downgraded variant without taking into account the high-quality or downgraded variants acquired for other tiles which do not have the same coordinates and without taking into account the high-quality variant acquired for this same tile, and then
- encrypting the compressed downgraded variant for this tile without taking into account the high-quality and downgraded variants acquired for other tiles which do not have the same coordinates and without taking into account the high-quality variant acquired for this same tile.
